# EUROPEAN PATENT APPLICATION

(11) **EP 4 627 900 A1**
(43) Date of publication of application: **08.10.2025**
(21) Application number: 25165286.3
(22) Date of filing: 21.03.2025
(51) Int. Cl.: A01B 69/04

(54) **OPERATION DEVICE, WORK MACHINE, OPERATION METHOD, AND OPERATION PROGRAM**

(30) Priority: 28.03.2024 JP 2024053086
(71) Applicant: Yanmar Holdings Co., Ltd., Osaka-shi, Osaka (JP)
(72) Inventor: MIYAKE, Koji, Okayama-shi (JP); IKOMA, Aoi, Osaka-shi (JP)
(74) Representative: Sekiguchi, Kazuya

(57) **Abstract**

An operation device 20 outputs a forward travel instruction to a rice transplanter 10 when receiving a simultaneous pressing operation to change both an acceleration button 232 and a deceleration button 233 among a plurality of operation portions 23 to the ON-state and, while maintaining the one operation portion 23 out of the acceleration button 232 and the deceleration button 233 in the ON-state after the simultaneous pressing operation, changes the other operation portion 23 from the ON-state to the OFF-state and then, when receiving the operation to change the other operation portion 23 from the OFF-state to the ON-state, outputs a vehicle speed change instruction to the rice transplanter 10.

## Description

### TECHNICAL FIELD

The present invention relates to an operation device that causes a work machine to perform an action, a work machine, an operation method, and an operation program.

### BACKGROUND ART

There is a conventionally known work vehicle capable of autonomously traveling in a field along a target route set in advance. There is a known operation device (remote controller) that allows a user to start or stop autonomous travel of a work vehicle at a location away from the work vehicle (see, for example, Patent Document 1).

### PRIOR ART DOCUMENT

### PATENT DOCUMENT

Patent Document 1: Japanese Unexamined Patent Publication No. 2022-96512

### SUMMARY OF INVENTION

### TECHNICAL PROBLEM

The operation device is provided with a plurality of operation portions (operation buttons) for receiving user operations, and a function for causing the work vehicle to perform an action is assigned to each operation portion. Further, the conventional operation device has a configuration capable of causing the work vehicle to perform a function different from the functions assigned to two operation portions when the operation portions are simultaneously pressed. However, in the conventional operation device, the functions executable in the work vehicle by the simultaneous operation of the two operation portions are limited, and there is a problem of a low operability of the operation device.

An object of the present invention is to provide an operation device, a work machine, an operation method, and an operation program in which the operability of the operation device that causes the work machine to perform an action can be improved.

### SOLUTION TO PROBLEM

An operation device according to the present invention includes a plurality of operation portions that receives, from a user, an instruction to cause a work machine to perform a predetermined action. The operation device outputs a first action instruction to the work machine when receiving a first operation to change both a first operation portion and a second operation portion among the plurality of operation portions to an ON-state, and while maintaining one operation portion out of the first operation portion and the second operation portion in the ON-state after the first operation, changes the other operation portion from the ON-state to an OFF-state and then, when receiving a second operation to change the other operation portion from the OFF-state to the ON-state, outputs a second action instruction different from the first action instruction to the work machine.

A work machine according to the present invention performs an action corresponding to an action instruction output from the operation device.

An operation method according to the present invention is an operation method in an operation device including a plurality of operation portions that receives, from a user, an instruction to cause a work machine to perform a predetermined action. The operation method implements receiving an operation for the plurality of operation portions from the user, outputting a first action instruction to the work machine when receiving a first operation to change both a first operation portion and a second operation portion among the plurality of operation portions to an ON-state, and while maintaining one operation portion out of the first operation portion and the second operation portion in the ON-state after the first operation, changing the other operation portion from the ON-state to an OFF-state and then, when receiving a second operation to change the other operation portion from the OFF-state to the ON-state, outputting a second action instruction different from the first action instruction to the work machine.

An operation program according to the present invention is an operation program in an operation device including a plurality of operation portions that receives, from a user, an instruction to cause a work machine to perform a predetermined action. The operation program causes one or more processors to execute receiving an operation for the plurality of operation portions from the user, outputting a first action instruction to the work machine when receiving a first operation to change both a first operation portion and a second operation portion among the plurality of operation portions to an ON-state, and while maintaining one operation portion out of the first operation portion and the second operation portion in the ON-state after the first operation, changing the other operation portion from the ON-state to an OFF-state and then, when receiving a second operation to change the other operation portion from the OFF-state to the ON-state, outputting a second action instruction different from the first action instruction to the work machine.

### ADVANTAGEOUS EFFECTS OF INVENTION

According to the present invention, it is possible to provide an operation device, a work machine, an operation method, and an operation program in which the operability of the operation device that causes the work machine to perform an action can be improved.

### BRIEF DESCRIPTION OF DRAWINGS

FIG. 1 is a block diagram illustrating a configuration of an autonomous traveling system according to an embodiment of the present invention.
FIG. 2A is a side view illustrating an example of a work vehicle (rice transplanter) according to the embodiment of the present invention.
FIG. 2B is a top view illustrating an example of the work vehicle (rice transplanter) according to the embodiment of the present invention.
FIG. 3 is a diagram illustrating an example of a field and a target route according to the embodiment of the present invention.
FIG. 4 is a plan view illustrating an overall configuration of an operation device according to the embodiment of the present invention.
FIG. 5 is a diagram illustrating a configuration of a housing portion that houses the operation device according to the embodiment of the present invention.
FIG. 6 is a diagram illustrating a housed state of the operation device according to the embodiment of the present invention.
FIG. 7A is a timing chart illustrating an example of ON/OFF timing of an operation portion of the operation device according to the embodiment of the present invention.
FIG. 7B is a timing chart illustrating an example of ON/OFF timing of the operation portion of the operation device according to the embodiment of the present invention.
FIG. 8A is a timing chart illustrating an example of ON/OFF timing of the operation portion of the operation device according to the embodiment of the present invention.
FIG. 8B is a timing chart illustrating an example of ON/OFF timing of the operation portion of the operation device according to the embodiment of the present invention.
FIG. 9A is a timing chart illustrating an example of ON/OFF timing of the operation portion of the operation device according to the embodiment of the present invention.
FIG. 9B is a timing chart illustrating an example of ON/OFF timing of the operation portion of the operation device according to the embodiment of the present invention.
FIG. 10 is a flowchart illustrating an example of a procedure of an operation control process executed by the operation device according to the embodiment of the present invention.
FIG. 11 is a schematic view illustrating a configuration of the operation device according to the embodiment of the present invention.
FIG. 12 is a table illustrating an example of a function pattern in the operation device according to the embodiment of the present invention.

### DESCRIPTION OF EMBODIMENTS

The following embodiment is an example embodying the present invention, and does not limit the technical scope according to the present invention.

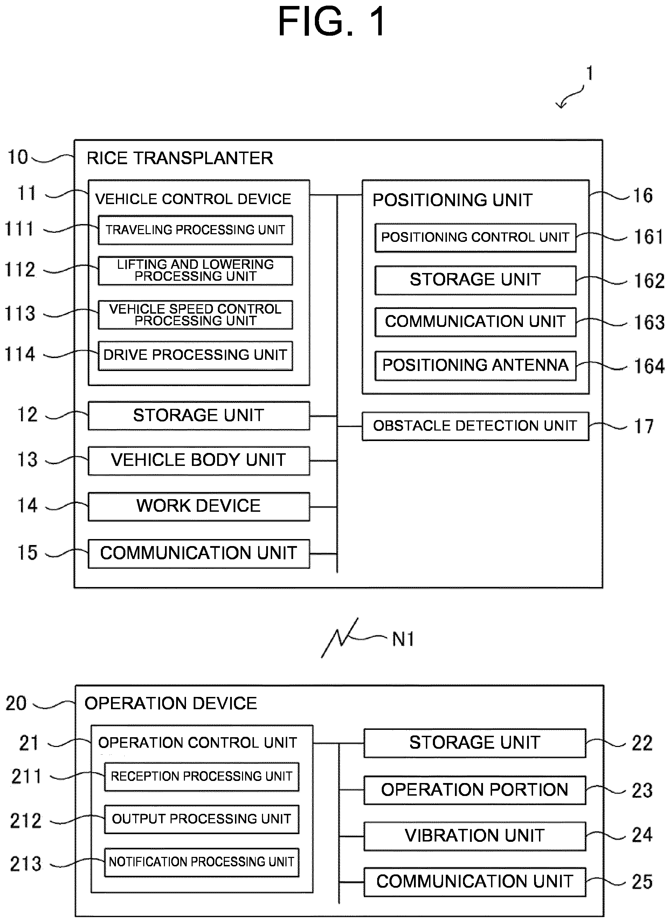

As illustrated in FIG. 1, an autonomous traveling system 1 according to the embodiment of the present invention includes a rice transplanter 10 and an operation device 20. The rice transplanter 10 and the operation device 20 can communicate with each other via a communication network N1. For example, the rice transplanter 10 and the operation device 20 can communicate with each other via Bluetooth (registered trademark), wireless LAN (Wi-Fi (registered trademark)), infrared communication, or the like.

According to the present embodiment, the rice transplanter 10 will be described as an example of a work machine according to the present invention. According to another embodiment, the work machine may be a work vehicle such as a tractor, a combine harvester, a construction machine, or a snowplow, or a flying object such as a drone for spraying work. The rice transplanter 10 is an autonomous traveling vehicle having a configuration capable of autonomous travel (autonomic travel) in a field registered in advance. For example, the operator (user) registers a work target field and sets a travel route (target route) along which the rice transplanter 10 autonomously travels in the field. The rice transplanter 10 autonomously travels along the target route based on the position information of the current position of the rice transplanter 10 calculated by a positioning unit 16. The rice transplanter 10 performs planting work while autonomously traveling in the field.

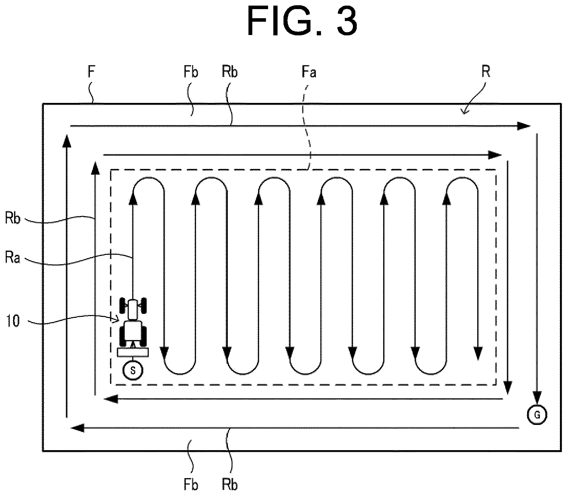

For example, the rice transplanter 10 autonomously travels along a target route R in a field F illustrated in FIG. 3. The field F illustrated in FIG. 3 includes an inner area Fa and a headland area Fb (outer area). In the field F, the target route R including a plurality of work routes is set in advance. For example, a work route Ra for traveling back and forth in parallel from a travel start position S is set in the inner area Fa, and a work route Rb for traveling spirally (traveling around) on the outer periphery toward a travel end position G is set in the headland area Fb.

The rice transplanter 10 starts autonomous travel from the travel start position S and performs work while traveling back and forth along the work route Ra in the inner area Fa. In the headland area Fb, the rice transplanter 10 performs work while traveling around to the travel end position G along the work route Rb.

Here, the work route Rb of the headland area Fb is set based on the number of working strokes. FIG. 3 illustrates the work route Rb in a case where the number of working strokes is two, but the number of working strokes of the work route Rb may be one. On the work route Rb illustrated in FIG. 3, the rice transplanter 10 performs work while traveling around the headland area Fb only twice. The width of the headland area Fb is set to a width corresponding to the number of working strokes. Therefore, when the number of working strokes is two, the width of the headland area Fb is substantially twice the working width of the rice transplanter 10.

The target route R is not limited to the route illustrated in FIG. 3 and is set as appropriate in accordance with the shape of the field F, the type of work, and the like. For example, the target route R is appropriately set in accordance with the number of working strokes of the headland area Fb or the width of the headland area Fb.

The operation device 20 is an operation remote controller that is operated by an operator and causes the rice transplanter 10 to perform an action. For example, at a location away from the rice transplanter 10, the operator can operate the operation device 20 to instruct the rice transplanter 10 to start and stop autonomous travel, perform a manual operation (forward and backward), start and stop a planting action, change the vehicle speed, lift and lower a work device 14 (planting unit), and the like. The operation device 20 can give an action instruction to the rice transplanter 10 when the operation device 20 is located in a range in which the operation device 20 can communicate with the rice transplanter 10. For example, the rice transplanter 10 starts and stops autonomous travel in accordance with an instruction output from the operation device 20.

The operation device 20 is provided with a plurality of operation portions (operation buttons) that receives an operation of the operator, and the respective functions for causing the rice transplanter 10 to perform an action are assigned to the respective operation portions. A conventional operation device has a configuration that, when two operation portions are simultaneously pressed, allows a work vehicle (e.g., rice transplanter) to perform a function different from the functions assigned to the respective operation portions. However, in the conventional operation device, the function executable in the work vehicle by the simultaneous operation of the two operation portions is limited, and there is a problem of a low operability of the operation device. Conversely, the operation device 20 according to the present embodiment has a configuration capable of improving the operability as described below. Specific configurations of the rice transplanter 10 and the operation device 20 will be described below.

### [Rice Transplanter 10]

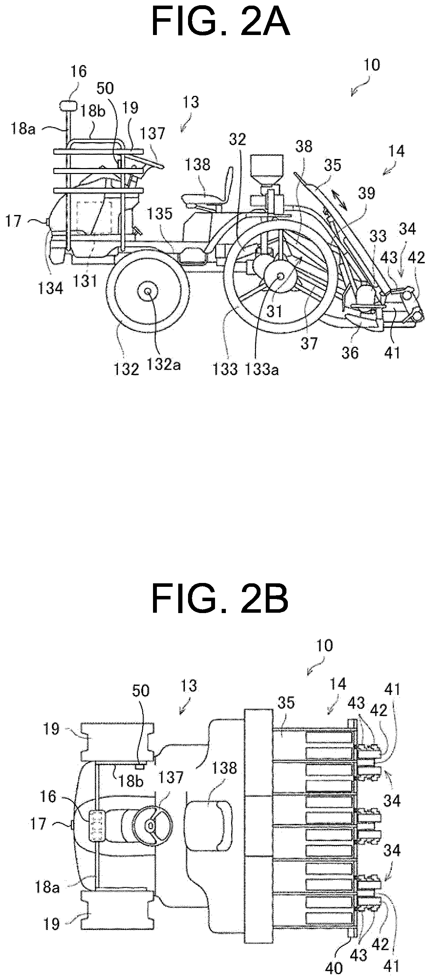

As illustrated in FIGS. 1, 2A, and 2B, the rice transplanter 10 includes a vehicle control device 11, a storage unit 12, a vehicle body unit 13, the work device 14, a communication unit 15, the positioning unit 16, an obstacle detection unit 17, and the like. The vehicle control device 11 is electrically connected to the storage unit 12, the vehicle body unit 13, the work device 14, the positioning unit 16, the obstacle detection unit 17, and the like. The vehicle control device 11 and the positioning unit 16 may be capable of performing wireless communication.

FIG. 2A is a side view of the rice transplanter 10, and FIG. 2B is a plan view of the rice transplanter 10. The rice transplanter 10 includes the vehicle body unit 13, a pair of right and left front wheels 132, a pair of right and left rear wheels 133, the work device 14 (planting unit), and the like.

An engine (drive unit) 131 is provided inside a hood 134 provided in a front portion of the vehicle body unit 13. The power generated by the engine 131 is transmitted to the front wheels 132 and the rear wheels 133 via a transmission case 135. The power transmitted via the transmission case 135 is also transmitted to the work device 14 via a PTO shaft 37 provided in a rear portion of the vehicle body unit 13. Power is transmitted to the PTO shaft 37 via a planting clutch (working clutch, PTO clutch) (not illustrated). A driver's seat 138 on which an operator rides is provided at a position between the front wheel 132 and the rear wheel 133 in the front-rear direction of the vehicle body unit 13.

Operation tools such as a steering handle 137, a main shift lever (not illustrated), and a planting clutch lever (not illustrated) are provided in front of the driver's seat 138. The steering handle 137 is an operation tool for changing a steering angle of the rice transplanter 10. The main shift lever is configured to be able to select at least positions of "forward", "backward", "neutral", and "seedling relay". When the main shift lever is operated to the "forward" position, the power is transmitted such that the front wheels 132 and the rear wheels 133 rotate in a direction in which the rice transplanter 10 moves forward. When the main shift lever is operated to the "backward" position, the power is driven such that the front wheels 132 and the rear wheels 133 rotate in a direction in which the rice transplanter 10 moves backward. When the main shift lever is operated to the "neutral" position, the transmission of power to the front wheels 132 and the rear wheels 133 is cut off. When the main shift lever is operated to the "seedling relay" position, the transmission of power to the front wheels 132, the rear wheels 133, and the PTO shaft 37 is cut off. When the planting clutch lever is operated to the "ON" position, the planting clutch enters a transmission state in which power is transmitted to the PTO shaft 37 (i.e., the work device 14), and when the planting clutch lever is operated to the "OFF" position, the planting clutch enters a cutoff state in which power is not transmitted to the PTO shaft 37. That is, when the planting clutch lever is set to the "ON" position, the driving of the work device 14 is started and the planting action is started. When the planting clutch lever is set to the "OFF" position, the driving of the work device 14 is stopped and the planting action is stopped.

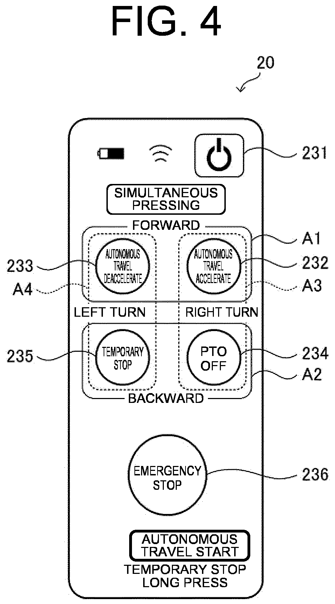

According to the present embodiment, the vehicle control device 11 switches "ON" and "OFF" of the planting clutch. When the vehicle control device 11 sets the planting clutch to "ON", the driving of the work device 14 is started, and the planting action is started. When the vehicle control device 11 sets the planting clutch to "OFF", the driving of the work device 14 is stopped, and the planting action is stopped. The vehicle control device 11 may switch "ON" and "OFF" of the planting clutch as internal processing and does not need to move the position of the planting clutch lever. The vehicle control device 11 can switch "ON" and "OFF" of the planting clutch in accordance with a user operation ("ON" and "OFF" of a PTO off button 234 of FIG. 4) in the operation device 20.

The work device 14 is connected to the rear of the vehicle body unit 13 via a lifting and lowering link mechanism 31. The lifting and lowering link mechanism 31 has a parallel link structure including a top link 39, a lower link 38, and the like. A lifting and lowering cylinder (lifting and lowering device) 32 is connected to the lower link 38. By expanding and contracting the lifting and lowering cylinder 32, the entire work device 14 can be lifted and lowered in a vertical direction. Thus, the height of the work device 14 can be changed between a work position (work height) at which the work device 14 is lowered to perform planting work and a non-work position (non-work height) at which the work device 14 is lifted to perform no planting work. Although the lifting and lowering cylinder 32 is a hydraulic cylinder, an electric cylinder may be used. A configuration may be adopted in which the work device 14 is lifted and lowered by an actuator other than the cylinder. The vehicle control device 11 can lift and lower the work device 14 in response to a user operation on the operation device 20.

The work device 14 (planting unit) includes a planting input case 33, a plurality of planting units 34, a seedling table 35, a plurality of floats 36, and the like.

Each of the planting units 34 includes a planting transmission case 41 and a rotary case 42. Power is transmitted to the planting transmission case 41 via the PTO shaft 37 and the planting input case 33. The rotary cases 42 are attached to both sides of each of the planting transmission cases 41 in a vehicle width direction. Two planting claws 43 are attached to each of the rotary cases 42 so as to be arranged in the traveling direction of the rice transplanter 10. Planting for one row is performed by the two planting claws 43.

As illustrated in FIG. 2A, the seedling table 35 is provided in front of and above the planting unit 34, and is configured so that a seedling mat can be placed thereon. The seedling table 35 is configured to be reciprocally movable in the lateral direction (slidable in the lateral direction). The seedling table 35 is configured so as to intermittently vertically feed and convey the seedling mat downward at the reciprocating end of the seedling table 35. With this configuration, the seedling table 35 can supply the seedlings of the seedling mat to each of the planting units 34. Thus, in the rice transplanter 10, the seedlings can be sequentially supplied to the respective planting units 34, and the seedlings can be continuously planted.

The float 36 illustrated in FIG. 2A is provided at the lower portion of the work device 14, and is provided so that the lower surface thereof can contact the ground. When the float 36 comes into contact with the ground, the paddy field before planting seedlings is leveled. Further, the float 36 is provided with a float sensor (not illustrated) that detects a swing angle of the float 36. The swing angle of the float 36 corresponds to the distance between the paddy field and the work device 14. The rice transplanter 10 can keep the ground height of the work device 14 constant by operating the lifting and lowering cylinder 32 based on the swing angle of the float 36 to lift and lower the work device 14.

A spare seedling table 19 is provided on the outer side of the hood 134 in the vehicle width direction, and a seedling box containing spare mat seedlings can be mounted thereon. The spare seedling table 19 is fixed to a connection frame 18b extending in the vertical direction and the front-rear direction on each of the right and left sides of the hood 134. Upper portions of the pair of right and left spare seedling tables 19 are connected to each other by a connection frame 18a extending in the vertical direction and the vehicle width direction. The positioning unit 16 is provided at the center of the connection frame 18a in the vehicle width direction.

A housing portion 50 that houses the operation device 20 is provided on the right connection frame 18b. For example, when the operator gets on the rice transplanter 10, the operator can house the operation device 20 in the housing portion 50. The housing portion 50 will be described in detail below.

The positioning unit 16 is a communication device that includes a positioning control unit 161, a storage unit 162, a communication unit 163, a positioning antenna 164 (see FIG. 1), and the like. For example, as illustrated in FIGS. 2A and 2B, the positioning unit 16 is provided at a front central upper portion of the rice transplanter 10. The installation location of the positioning unit 16 is not limited. The positioning control unit 161, the storage unit 162, the communication unit 163, and the positioning antenna 164 of the positioning unit 16 may be provided at different positions in the rice transplanter 10 in a distributed manner. A battery is connected to the positioning unit 16, and the positioning unit 16 can be operated even when the engine 131 is stopped. As the positioning unit 16, for example, a mobile phone terminal, a smartphone, a tablet terminal, a quantum compass, or the like may be used instead.

The positioning control unit 161 is a computer system including one or more processors and storage memories such as a non-volatile memory and a RAM. The storage unit 162 is a non-volatile memory or the like that stores a program for causing the positioning control unit 161 to execute positioning processing, and data such as positioning information and movement information. For example, the program is non-transitorily recorded in a computer-readable recording medium such as a CD or a DVD, read by a predetermined reading device (not illustrated), and stored in the storage unit 162. The program may be downloaded from a server (not illustrated) to the positioning unit 16 via the communication network N1 and stored in the storage unit 162.

The communication unit 163 is a communication interface for connecting the positioning unit 16 to a communication network in a wired or wireless manner and performing data communication with an external device such as a base station server via the communication network in accordance with a predetermined communication protocol.

The positioning antenna 164 is an antenna that receives radio waves (GNSS signals) transmitted from satellites.

The positioning control unit 161 calculates the current position of the rice transplanter 10 based on a GNSS signal received by the positioning antenna 164 from a satellite. For example, in a case where the rice transplanter 10 autonomously travels in the field F, when the positioning antenna 164 receives radio waves (transmission time, orbit information, and the like) transmitted from each of a plurality of satellites, the positioning control unit 161 calculates the distance between the positioning antenna 164 and each satellite, and calculates the current position (latitude and longitude) of the rice transplanter 10 based on the calculated distance. The positioning control unit 161 may perform positioning by a real-time kinematic method (RTK-GNSS positioning method (RTK method)) in which the current position of the rice transplanter 10 is calculated using correction information corresponding to a base station (reference station) close to the rice transplanter 10. As described above, the rice transplanter 10 autonomously travels by using the positioning information by the RTK method. The current position of the rice transplanter 10 may be the same position as the determined position (for example, the position of the positioning antenna 164), or may be a position shifted from the determined position (for example, the planting action position of the planting unit 34). The positioning control unit 161 may calculate (determine) the current position of the rice transplanter 10 by using a quantum compass.

The obstacle detection unit 17 is provided in front of the vehicle body unit 13. The obstacle detection unit 17 is configured by a sensor that detects an obstacle in a predetermined detection area using, for example, infrared rays, ultrasonic waves, or millimeter waves. For example, the obstacle detection unit 17 may be a lidar sensor (distance sensor) capable of three dimensionally measuring a distance to a measurement target (obstacle) using a laser, or may be a sonar sensor including a plurality of sonars capable of measuring a distance to a measurement target using an ultrasonic wave. The obstacle is, for example, a ridge, an intake, a utility pole, a material temporarily placed in the field F, or a person. When detecting the obstacle, the obstacle detection unit 17 transmits a detection result (measurement information) to the vehicle control device 11. The vehicle control device 11 decelerates the speed or stops the rice transplanter 10 when the obstacle detection unit 17 detects an obstacle in the detection area. The obstacle detection unit 17 may be provided on each of the front side, the rear side, the left side, and the right side. In this case, the vehicle control device 11 controls the travel of the rice transplanter 10 based on the detection result of each of the obstacle detection units 17.

The storage unit 12 is a non-volatile storage unit such as a hard disk drive (HDD), a solid state drive (SSD), or a flash memory that stores various types of information. The storage unit 12 stores a control program such as an autonomous travel program for causing the vehicle control device 11 to execute autonomous traveling processing. For example, the autonomous travel program is non-transitorily recorded in a computer-readable recording medium such as a flash ROM, an EEPROM, a CD, or a DVD, read by a predetermined reading device (not illustrated), and stored in the storage unit 12. The autonomous travel program may be downloaded from a server (not illustrated) to the rice transplanter 10 via the communication network N1 and stored in the storage unit 12. The storage unit 12 may store the route data of the target route R generated by the operation device 20.

The vehicle control device 11 includes control devices such as a CPU, a ROM, and a RAM. The CPU is a processor that executes various kinds of arithmetic processing. The ROM is a non-volatile storage unit in which control programs such as a BIOS and an OS for causing the CPU to execute various kinds of arithmetic processing are stored in advance. The RAM is a volatile or non-volatile storage unit that stores various kinds of information, and is used as a temporary storage memory (work area) for various kinds of processing executed by the CPU. The vehicle control device 11 controls the rice transplanter 10 by causing the CPU to execute various control programs stored in advance in the ROM or the storage unit 12.

The vehicle control device 11 controls the action of the rice transplanter 10 in response to various user operations on the rice transplanter 10. The vehicle control device 11 executes autonomous traveling processing of the rice transplanter 10 based on the current position of the rice transplanter 10 calculated by the positioning unit 16 and the target route R set in advance.

As illustrated in FIG. 1, the vehicle control device 11 includes various processing units such as a traveling processing unit 111, a lifting and lowering processing unit 112, a vehicle speed control processing unit 113, and a drive processing unit 114. The vehicle control device 11 functions as the various processing units by causing the CPU to execute various types of processing in accordance with the autonomous travel program. Some or all of the processing units may be constituted by electronic circuits. The autonomous travel program may be a program for causing a plurality of processors to function as the processing units.

The traveling processing unit 111 controls traveling of the rice transplanter 10. Specifically, the traveling processing unit 111 causes the rice transplanter 10 to autonomously travel along the target route R set in the field F. For example, when a travel start instruction is acquired from the operation device 20, the traveling processing unit 111 starts autonomous travel of the rice transplanter 10. For example, in a case where the rice transplanter 10 satisfies an autonomous travel start condition (work start condition), when the operator presses (for example, long-presses) a temporary stop button 235 (see FIG. 4) on the operation device 20, the operation device 20 outputs a travel start instruction to the rice transplanter 10. When acquiring the travel start instruction from the operation device 20, the traveling processing unit 111 causes the rice transplanter 10 to start autonomous travel along the target route R. For example, the traveling processing unit 111 causes the rice transplanter 10 to travel straight from the start end to the terminal end of each work route and to travel around from the start end to the terminal end of each turning route.

The traveling processing unit 111 stops the travel of the rice transplanter 10 when acquiring a stop instruction from the operation device 20. For example, when the operator presses (e.g., short-presses) a temporary stop button 235 (see FIG. 4) on the operation device 20, the operation device 20 outputs a temporary stop instruction to the rice transplanter 10. For example, when the operator presses an emergency stop button 236 (see FIG. 4) on the operation device 20, the operation device 20 outputs an autonomous travel stop instruction to the rice transplanter 10.

When the temporary stop instruction is acquired, the traveling processing unit 111 temporarily stops the autonomous travel in a state where the autonomous travel mode is maintained. In this case, the traveling processing unit 111 restarts the autonomous travel when the travel start instruction is acquired in the temporary stop state. The traveling processing unit 111 stops the engine 131 when the autonomous travel stop instruction is acquired. In this case, the restart of the autonomous travel by the operation device 20 is prohibited, and the traveling processing unit 111 restarts the autonomous travel when the operator riding on the rice transplanter 10 starts the engine and performs the autonomous travel start operation again.

Further, the traveling processing unit 111 controls the travel of the rice transplanter 10 based on the detection result by the obstacle detection unit 17. Specifically, the traveling processing unit 111 decelerates the speed or stops the rice transplanter 10 when the obstacle detection unit 17 detects an obstacle. Further, the traveling processing unit 111 may cause the rice transplanter 10 to perform avoidance travel to avoid the obstacle.

Further, the traveling processing unit 111 causes the rice transplanter 10 to travel in accordance with a travel instruction acquired from the operation device 20 in a manually operable state in the autonomous travel mode. For example, the traveling processing unit 111 causes the rice transplanter 10 to travel forward when acquiring a forward travel instruction from the operation device 20 while the autonomous travel is temporarily stopped. For example, when the operator simultaneously presses an acceleration button 232 and a deceleration button 233 (see FIG. 4) on the operation device 20 (simultaneous pressing operation), the operation device 20 outputs a forward travel instruction to the rice transplanter 10, and the traveling processing unit 111 causes the rice transplanter 10 to travel forward in accordance with the forward travel instruction. Further, the traveling processing unit 111 causes the rice transplanter 10 to travel backward when a backward travel instruction is acquired from the operation device 20 while the autonomous travel is temporarily stopped. For example, when the operator simultaneously presses the temporary stop button 235 and the PTO off button 234 (see FIG. 4) on the operation device 20, the operation device 20 outputs a backward travel instruction to the rice transplanter 10, and the traveling processing unit 111 causes the rice transplanter 10 to travel backward in accordance with the backward travel instruction.

The "simultaneous pressing operation" of the two operation portions 23 is not limited to an operation in which the two operation portions 23 are changed to the ON-state at the same timing, and also includes an operation in which one of the operation portions 23 is changed to the ON-state and then, within a predetermined time, the other operation portion 23 is changed to the ON-state. Further, the simultaneous pressing operation is not limited to the operation by the two operation portions 23, and may be an operation by the three or more operation portions 23.

The lifting and lowering processing unit 112 controls the position (posture) of the work device 14. Specifically, the lifting and lowering processing unit 112 changes the height of the work device 14 between a work position (work height) at which the work device 14 is lowered to perform the planting work and a non-work position (non-work height) at which the work device 14 is lifted to perform no planting work. The lifting and lowering processing unit 112 lowers the work device 14 to the work position when the paddy field is leveled by the float 36 (see FIG. 2A). The lifting and lowering processing unit 112 lifts and lowers the work device 14 by inputting a control signal to the lifting and lowering cylinder 32 and causing the lifting and lowering cylinder 32 to expand and contract.

Further, the lifting and lowering processing unit 112 controls lifting and lowering of the work device 14 based on the position information of the rice transplanter 10. Specifically, the lifting and lowering processing unit 112 lowers the work device 14 from the non-work position to the work position based on the work start position in the target route R.

The lifting and lowering processing unit 112 lifts the work device 14 when acquiring a lifting instruction of the work device 14 from the operation device 20. For example, when the operator simultaneously presses the deceleration button 233 and the PTO off button 234 (see FIG. 4) on the operation device 20, the operation device 20 outputs a lifting instruction to the rice transplanter 10, and the lifting and lowering processing unit 112 lifts the work device 14 in accordance with the lifting instruction. Further, the lifting and lowering processing unit 112 lowers the work device 14 when acquiring a lowering instruction of the work device 14 from the operation device 20. For example, when the operator simultaneously presses the acceleration button 232 and the temporary stop button 235 (see FIG. 4) on the operation device 20, the operation device 20 outputs a lowering instruction to the rice transplanter 10, and the lifting and lowering processing unit 112 lowers the work device 14 in accordance with the lowering instruction.

The vehicle speed control processing unit 113 controls the vehicle speed of the rice transplanter 10 during autonomous travel. Specifically, the vehicle speed control processing unit 113 switches the vehicle speed of the rice transplanter 10 based on the setting information set in advance. For example, when the operator sets the vehicle speed during straight travel and the vehicle speed during turning travel on an operation terminal (not illustrated), the vehicle speed control processing unit 113 switches the vehicle speed (set vehicle speed) of the rice transplanter 10 in accordance with a travel route (straight travel route, turning route, or the like). For example, the vehicle speed control processing unit 113 switches to the set vehicle speed for straight travel when the rice transplanter 10 travels on a straight route, and switches to the set vehicle speed for turning travel when the rice transplanter 10 travels on a turning route.

The vehicle speed control processing unit 113 changes the vehicle speed of the rice transplanter 10 when acquiring a vehicle speed change instruction from the operation device 20. For example, when the operator presses the acceleration button 232 (see FIG. 4) on the operation device 20 while the rice transplanter 10 is autonomously traveling, the operation device 20 outputs an acceleration instruction to the rice transplanter 10. For example, when the operator presses the deceleration button 233 (see FIG. 4) on the operation device 20 while the rice transplanter 10 is autonomously traveling, the operation device 20 outputs a deceleration instruction to the rice transplanter 10.

The drive processing unit 114 controls the driving of the work device 14. Specifically, the drive processing unit 114 starts the driving of the work device 14 to start the planting action (the action of the planting unit 34 to plant seedlings on the paddy field). Specifically, the drive processing unit 114 switches between "on" and "off" of the planting clutch to switch between driving and stopping of the work device 14. For example, the drive processing unit 114 sets the planting clutch to "ON", starts driving the work device 14, and causes the planting unit 34 to start the planting action. The drive processing unit 114 sets the planting clutch to "OFF", stops the driving of the work device 14, and causes the planting unit 34 to stop the planting action.

The drive processing unit 114 starts driving of the work device 14 at the work start position. Specifically, the drive processing unit 114 controls the timing at which the planting clutch is engaged so that the planting action of the planting unit 34 is started when the rice transplanter 10 reaches the work start position, that is, when the planting unit 34 reaches the work start position.

When acquiring a drive instruction of the planting unit 34 from the operation device 20, the drive processing unit 114 sets the planting clutch to "ON" and causes the planting unit 34 to start a planting action. For example, when the operator presses the PTO off button 234 (see FIG. 4) (turns on PTO) on the operation device 20, the operation device 20 outputs a drive instruction to the rice transplanter 10. When acquiring a drive stop instruction from the operation device 20, the drive processing unit 114 sets the planting clutch to "No" and causes the planting unit 34 to stop the planting action. For example, when the operator presses the PTO off button 234 (see FIG. 4) (turns off PTO) on the operation device 20, the operation device 20 outputs a drive stop instruction to the rice transplanter 10.

### [Operation Device 20]

As illustrated in FIG. 1, the operation device 20 is a device including an operation control unit 21, a storage unit 22, an operation portion 23, a vibration unit 24, a communication unit 25, and the like. The operation device 20 is a device (remote controller) capable of remotely operating the rice transplanter 10. The operation device 20 may be a portable information terminal such as a smartphone or a tablet terminal. FIG. 4 illustrates a remote controller as an example of the operation device 20.

The communication unit 25 is a communication interface for connecting the operation device 20 to the communication network N1 in a wireless or wired manner and performing data communication with an external device such as the rice transplanter 10 via the communication network N1 in accordance with a predetermined communication protocol.

The vibration unit 24 is a vibrator that vibrates the main body of the operation device 20. The vibration unit 24 vibrates the main body of the operation device 20 by driving an internal motor to rotate a weight (not illustrated) in accordance with an instruction from the operation control unit 21. The operation device 20 may be capable of switching between enabling and disabling the vibration function in accordance with a setting operation by the operator.

The operation portion 23 is an operation button that receives an operation of the operator. The operation portion 23 is provided on the front surface of the main body of the operation device 20. The operation portion 23 is, for example, a physical switch that can be pressed by the operator with a finger. According to another embodiment, the operation portion 23 may be an image icon displayed on a touch panel.

As illustrated in FIG. 4, the plurality of operation portions 23 is provided on the front surface of the main body of the operation device 20. The plurality of operation portions 23 includes the power button 231, the acceleration button 232, the deceleration button 233, the PTO off button 234, the temporary stop button 235, and the emergency stop button 236. The function for causing the rice transplanter 10 to perform an action is assigned to each of the operation portions 23. A specific function of each of the operation portions 23 will be described below.

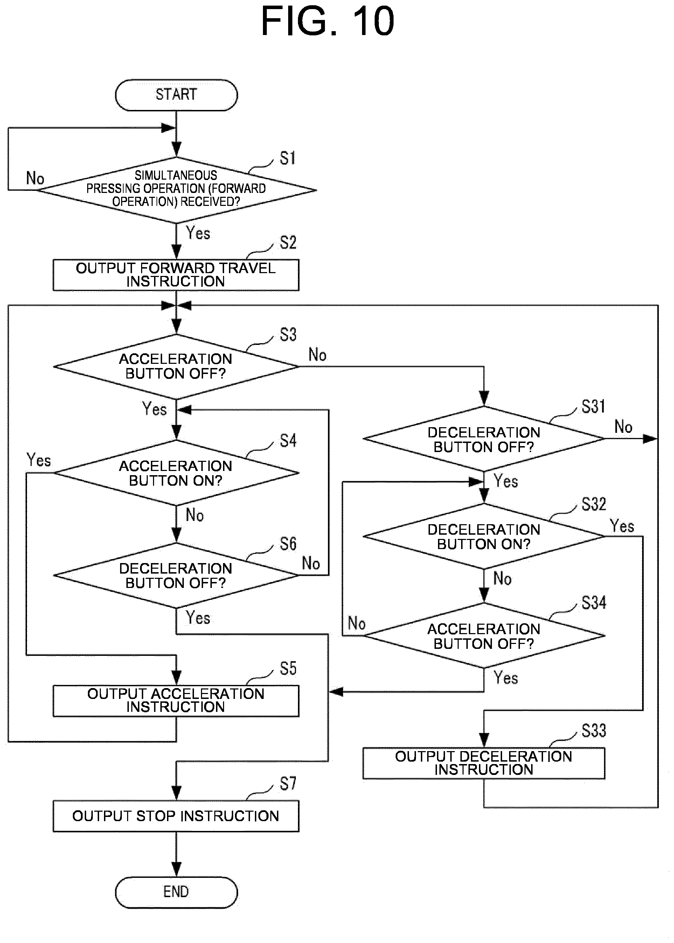

The storage unit 22 is a non-volatile storage unit such as an HDD, an SSD, or a flash memory that stores various kinds of information. The storage unit 22 stores a control program such as an operation control program for causing the operation control unit 21 to execute an operation control process (see FIG. 10) described below. For example, the control program is non-transitorily recorded in a computer-readable recording medium such as a flash ROM, an EEPROM, a CD, or a DVD, read by a predetermined reading device (not illustrated), and stored in the storage unit 22. The control program may be downloaded from a server (not illustrated) to the operation device 20 via the communication network N1 and stored in the storage unit 22.

The operation control unit 21 includes control devices such as a CPU, a ROM, and a RAM. The CPU is a processor that executes various kinds of arithmetic processing. The ROM is a non-volatile storage unit in which control programs such as a BIOS and an OS for causing the CPU to execute various kinds of arithmetic processing are stored in advance. The RAM is a volatile or non-volatile storage unit that stores various kinds of information, and is used as a temporary storage memory for various kinds of processing executed by the CPU. The operation control unit 21 controls the operation device 20 by causing the CPU to execute various control programs stored in advance in the ROM or the storage unit 22.

As illustrated in FIG. 1, the operation control unit 21 includes various processing units such as a reception processing unit 211, an output processing unit 212, and a notification processing unit 213. The operation control unit 21 functions as the various processing units by causing the CPU to execute various types of processing in accordance with the control program. Some or all of the processing units may be constituted by electronic circuits. The control program may be a program that causes a plurality of processors to function as the processing unit.

The reception processing unit 211 receives an operation performed by the operator on the operation portion 23. Specifically, the reception processing unit 211 receives a pressing operation performed by the operator on each of the plurality of operation portions 23. For example, the reception processing unit 211 receives a short pressing operation, a long pressing operation, and a simultaneous pressing operation for each of the operation portions 23. The "long pressing operation" is an operation in which the operation portion 23 is changed to the ON-state and then the ON-state continues for more than a predetermined time (an operation in which the operator continues to press the operation portion 23 for more than the predetermined time), and the "short pressing operation" is an operation in which the operation portion 23 is changed to the ON-state and then, within the predetermined time, is changed from the ON-state to the OFF-state (an operation in which the operator presses the operation portion 23 and then, within the predetermined time, releases the operation portion 23).

The reception processing unit 211 can receive an operation in which the simultaneous pressing operation and the short pressing operation are combined and an operation in which the simultaneous pressing operation and the long pressing operation are combined. For example, after receiving the simultaneous pressing operation of the two operation portions 23, the reception processing unit 211 can receive the short pressing operation or the long pressing operation of one of the operation portions 23 while maintaining the ON-state of the other operation portion 23. A specific operation method will be described below.

The output processing unit 212 outputs, to the rice transplanter 10, operation information (action instruction) corresponding to the operation of the operator received by the reception processing unit 211. The rice transplanter 10 performs a predetermined action in accordance with the operation information (action instruction) acquired from the operation device 20. For example, when the operator presses the specific operation portion 23 of the operation device 20, the reception processing unit 211 receives the pressing operation of the operation portion 23, and the output processing unit 212 outputs, to the rice transplanter 10, the operation information (action instruction) corresponding to the function assigned to the operation portion 23. When acquiring the operation information (action instruction), the rice transplanter 10 performs the action corresponding to the operation information. When acquiring the operation information (action instruction), the rice transplanter 10 notifies (feeds back) the operation device 20 that the operation information has been acquired.

When the operation portion 23 receives an instruction from the operator, the notification processing unit 213 causes at least any one of the operation device 20 and the rice transplanter 10 to notify the information indicating that the instruction has been received. Specifically, when the operator presses the operation portion 23, the output processing unit 212 outputs the operation information to the rice transplanter 10. When acquiring the operation information, the rice transplanter 10 notifies (feeds back) the operation device 20 that the operation information has been acquired. When acquiring the notification, the notification processing unit 213 vibrates the vibration unit 24. Thus, the operator can recognize that his/her operation instruction has been received and the action corresponding to the operation instruction has been executed in the rice transplanter 10.

According to another embodiment, when the operation device 20 includes a display unit, the notification processing unit 213 may cause the display unit to display the information indicating that the instruction has been received. According to another embodiment, when the operation device 20 includes a speaker, the notification processing unit 213 may cause the speaker to emit a sound (buzzer sound, voice, or the like) indicating that the instruction has been received.

As described above, the notification processing unit 213 may cause the information to be notified by at least any one of the method of causing the display unit to display the information, the method of causing the speaker to emit sound, and the method of causing the vibration unit 24 to vibrate.

The notification processing unit 213 may output a notification instruction to the rice transplanter 10. When acquiring the notification instruction from the operation device 20, the rice transplanter 10 emits a sound (buzzer sound, voice, or the like) indicating that the instruction has been acquired from a speaker provided in the rice transplanter 10, or displays the information indicating that the instruction has been acquired on a display unit provided in the rice transplanter 10.

### [Function of Operation Portion 23]

A specific function of each operation portion 23 will be described below.

The power button 231 is an operation portion that turns on/off the power of the operation device 20. In FIG. 4, the power button 231 is provided at the upper end of the front surface of the main body of the operation device 20, but the position of the power button 231 is not limited thereto, and may be provided, for example, on the lower side of the main body. When the power enters the ON-state, the LED of the power button 231 is turned on, and when the power enters the OFF-state, the LED of the power button 231 is turned off.

The temporary stop button 235 is an operation portion that starts autonomous travel of the rice transplanter 10 or temporarily stops the rice transplanter 10 during autonomous travel.

For example, the operator gets on the rice transplanter 10, moves (manually travels) the rice transplanter 10 to the work start position, performs an operation related to the work start condition, and switches to the autonomous travel mode. Thus, the operator can start the autonomous travel by the operation device 20 at a location away from the rice transplanter 10. For example, when the operator long-presses the temporary stop button 235, the output processing unit 212 outputs a travel start instruction to the rice transplanter 10. When acquiring the travel start instruction, the rice transplanter 10 starts autonomous travel and work (planting work) along the target route R.

When the operator presses (short-presses) the temporary stop button 235 while the rice transplanter 10 is autonomously traveling, the output processing unit 212 outputs a travel stop instruction to the rice transplanter 10. When acquiring the travel stop instruction, the rice transplanter 10 temporarily stops the autonomous travel and stops PTO driving (work). Further, when the operator long-presses the temporary stop button 235 during the temporary stop of the rice transplanter 10, the rice transplanter 10 restarts the autonomous travel and PTO driving (work). The operator can start or temporarily stop the autonomous travel by operating the temporary stop button 235 at a location away from the rice transplanter 10.

The PTO off button 234 is an operation portion that turns on/off PTO driving. For example, when the rice transplanter 10 temporarily stops during the autonomous travel, the drive processing unit 114 switches the planting clutch to "OFF" to stop the driving of the work device 14. When the autonomous travel of the rice transplanter 10 is temporarily stopped and the planting clutch is turned "OFF" (PTO is OFF), the operator can perform the ON/OFF operation of the PTO off button 234. For example, when the operator presses the PTO off button 234 to set the ON-state, the output processing unit 212 outputs a PTO driving instruction to the rice transplanter 10. When acquiring the PTO drive instruction, the rice transplanter 10 switches the planting clutch to "ON" to enable the planting action by the planting unit 34. When the operator presses the PTO off button 234 to set the OFF-state, the output processing unit 212 outputs a PTO stop instruction to the rice transplanter 10. When acquiring the PTO stop instruction, the rice transplanter 10 switches the planting clutch to "OFF" to stop the planting action by the planting unit 34.

The acceleration button 232 is an operation portion that accelerates the vehicle speed of the rice transplanter 10 during autonomous travel. When the operator presses the acceleration button 232 while the rice transplanter 10 is autonomously traveling, the output processing unit 212 outputs an acceleration instruction to the rice transplanter 10. The rice transplanter 10 accelerates the vehicle speed when acquiring the acceleration instruction. Each time the acceleration button 232 is pressed, the rice transplanter 10 accelerates the vehicle speed in stages. When the acceleration button 232 is long-pressed, the rice transplanter 10 continuously accelerates the vehicle speed during the long press (long-pressing period).

The deceleration button 233 is an operation portion that decelerates the vehicle speed of the rice transplanter 10 during autonomous travel. When the operator presses the deceleration button 233 while the rice transplanter 10 is autonomously traveling, the output processing unit 212 outputs a deceleration instruction to the rice transplanter 10. When acquiring the deceleration instruction, the rice transplanter 10 decelerates the vehicle speed. Each time the deceleration button 233 is pressed, the rice transplanter 10 decelerates the vehicle speed in stages. When the deceleration button 233 is long-pressed, the rice transplanter 10 continuously decelerates the vehicle speed during the long press (long-pressing period).

The four operation portions 23, i.e., the acceleration button 232, the deceleration button 233, the PTO off button 234, and the temporary stop button 235, described above are arranged in two rows in the vertical direction and two columns in the horizontal direction on the upper side of the front surface of the main body of the operation device 20 and are provided at positions corresponding to four apexes of a rectangle. The acceleration button 232 is provided at the upper right, the deceleration button 233 is provided at the upper left, the PTO off button 234 is provided at the lower right, and the temporary stop button 235 is provided at the lower left. In the 2×2 arrangement, the positions of the acceleration button 232, the deceleration button 233, the PTO off button 234, and the temporary stop button 235 are not limited to the positions illustrated in FIG. 4.

The functions assigned to the four operation portions 23 are not limited to the respective functions illustrated in FIG. 4, and other functions may be assigned to the respective operation portions 23. Examples of other functions include lifting and lowering the work device, increasing and decreasing the engine speed, offsetting the travel position during autonomous travel, and registering a reference point when generating the target route.

The emergency stop button 236 is an operation portion that stops the autonomously traveling rice transplanter 10. The emergency stop button 236 is provided on the lower side (below the four operation portions 23) on the front surface of the main body of the operation device 20. The emergency stop button 236 may be provided on the upper side of the main body.

When the operator presses the emergency stop button 236 while the rice transplanter 10 is autonomously traveling, the output processing unit 212 outputs an autonomous travel stop instruction to the rice transplanter 10. When acquiring the autonomous travel stop instruction, the rice transplanter 10 stops the engine 131 to stop autonomous travel and work. As described above, unlike the temporary stop of the temporary stop button 235, the emergency stop function is assigned to the emergency stop button 236, and therefore the engine of the rice transplanter 10 is stopped when the emergency stop button 236 is pressed. Therefore, when restarting the autonomous travel and the work, the operator needs to get on the rice transplanter 10, start the engine 131, and perform the autonomous travel start operation again. As described above, when the emergency stop button 236 is pressed, the operation device 20 is prohibited from restarting the autonomous travel from a remote place, and therefore, the operator moves to the place of the rice transplanter 10 and performs an operation to restart the autonomous travel after confirming safety around the rice transplanter 10.

Here, a function different from the function assigned to each of the operation portions 23 is assigned to a combination of the two operation portions 23 among the four operation portions 23. For example, a forward travel function is assigned to the combination of the acceleration button 232 and the deceleration button 233, a backward travel function is assigned to the combination of the PTO off button 234 and the temporary stop button 235, a right turn (right steering) function is assigned to the combination of the acceleration button 232 and the PTO off button 234, and a left turn (left steering) function is assigned to the combination of the deceleration button 233 and the temporary stop button 235.

The function assigned to the combination of the two operation portions 23 is performed, for example, when the two operation portions 23 are simultaneously pressed. Specifically, when the operator simultaneously presses the acceleration button 232 and the deceleration button 233 while the autonomous travel of the rice transplanter 10 is temporarily stopped, the output processing unit 212 outputs a forward travel instruction to the rice transplanter 10. The traveling processing unit 111 causes the rice transplanter 10 to travel forward in accordance with the forward travel instruction. When the operator simultaneously presses the PTO off button 234 and the temporary stop button 235 while the autonomous travel of the rice transplanter 10 is temporarily stopped, the output processing unit 212 outputs a backward travel instruction to the rice transplanter 10. The traveling processing unit 111 causes the rice transplanter 10 to travel backward in accordance with the backward travel instruction.

When the operator simultaneously presses the acceleration button 232 and the PTO off button 234 while the autonomous travel of the rice transplanter 10 is temporarily stopped, the output processing unit 212 outputs a travel start instruction and a right turn instruction to the rice transplanter 10. The traveling processing unit 111 causes the rice transplanter 10 to start a right turn in accordance with the right turn instruction. When the operator simultaneously presses the deceleration button 233 and the temporary stop button 235 while the autonomous travel of the rice transplanter 10 is temporarily stopped, the output processing unit 212 outputs a travel start instruction and a left turn instruction to the rice transplanter 10. The traveling processing unit 111 causes the rice transplanter 10 to start a left turn in accordance with the left turn instruction.

Identification frames A1 to A4 (see FIG. 4) surrounding the two operation portions 23 corresponding to the combination and the names ("forward", "backward", "right turn", and "left turn" in FIG. 4) of the functions corresponding to the combinations may be displayed on the front surface of the main body of the operation device 20 so that the operator can easily grasp the functions performed by the simultaneous pressing operation of the two operation portions 23.

As described above, the operation device 20 can cause the rice transplanter 10 to perform an action by receiving an operation of each of the operation portions 23 by the operator and outputting an action instruction corresponding to the operation to the rice transplanter 10 at a location away from the rice transplanter 10.

The operation device 20 may be provided with a communication display unit that displays a communication state with the rice transplanter 10, an abnormality display unit (LED) that is turned on when the rice transplanter 10 detects an obstacle or some trouble occurs in the rice transplanter 10, and the like.

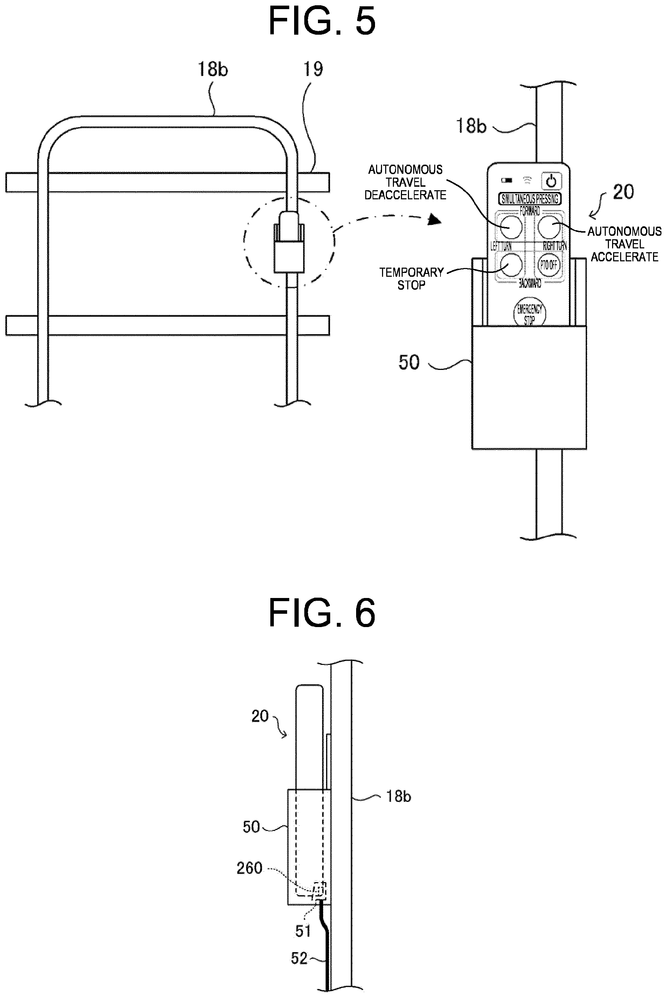

A charge terminal 260 (see FIG. 6) may be provided on the bottom surface of the operation device 20. For example, as illustrated in FIG. 5, the operation device 20 can be housed in the housing portion 50 attached to a connection frame 18b of the rice transplanter 10. As illustrated in FIG. 6, a power supply terminal 51 is provided on an inner bottom surface of the housing portion 50, and a cable 52 for supplying electric power of a battery of the rice transplanter 10 is connected to the power supply terminal 51. Therefore, when the operation device 20 is housed in the housing portion 50, as illustrated in FIG. 6, the charge terminal 260 and the power supply terminal 51 are connected to each other so that the battery of the operation device 20 can be charged. The operator houses the operation device 20 in the housing portion 50 while riding on the rice transplanter 10 so that the operation device 20 can be charged and the loss of the operation device 20 can be prevented.

### [Adjustment Function by Simultaneous Pressing Operation]

As described above, when the operator simultaneously presses the plurality of operation portions 23 (the two operation portions 23 according to the present embodiment), the operation device 20 can cause the rice transplanter 10 to perform a function different from the functions assigned to the respective operation portions 23. The operation device 20 has a configuration (adjustment function) capable of causing the rice transplanter 10 to further perform a specific action (adjustment action) by performing a specific operation on the plurality of operation portions 23 that have been simultaneously pressed. For example, the operation device 20 can adjust the vehicle speed of the rice transplanter 10, adjust the travel distance during travel, and adjust the steering amount during steering. A specific example of the adjustment function will be described below.

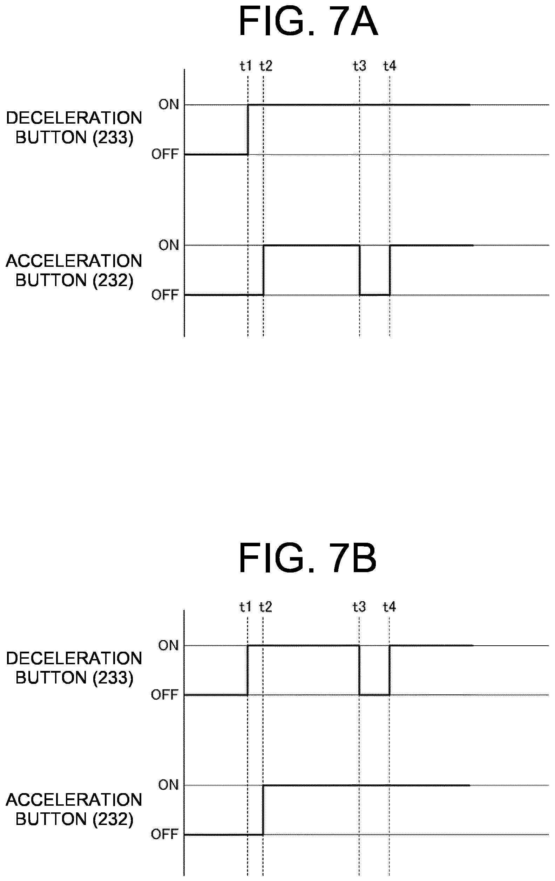

FIGS. 7A and 7B are timing charts illustrating an example of an operation method relating to the adjustment function of the vehicle speed. In FIGS. 7A and 7B, a deceleration button 233 and an acceleration button 232 are illustrated as an example of a combination of the two operation portions 23, and ON/OFF timings of the operation buttons are illustrated.

For example, as illustrated in FIG. 7A, when the operator simultaneously presses the acceleration button 232 and the deceleration button 233 while the rice transplanter 10 temporarily stops autonomous travel (for example, when the deceleration button 233 is pressed (time t1) and then within a predetermined time, the acceleration button 232 is pressed (time t2)), the operation control unit 21 receives the simultaneous pressing operation and outputs a forward travel instruction to the rice transplanter 10. As a result, the rice transplanter 10 starts forward travel. The operation control unit 21 continuously outputs the forward travel instruction to the rice transplanter 10 while the simultaneous pressing operation is continued, that is, while both the acceleration button 232 and the deceleration button 233 are in the ON-state (times t2 to t3). Thus, the rice transplanter 10 continues to travel forward.

Here, when the operator releases the acceleration button 232 at the time t3, that is, when the acceleration button 232 is changed from the ON-state to the OFF-state, the operation control unit 21 starts to measure the time. Then, when the acceleration button 232 is changed to the ON-state again within the set time after the acceleration button 232 is changed to the OFF-state (time t4), the operation control unit 21 accelerates the vehicle speed of the rice transplanter 10 traveling forward.

When the acceleration button 232 is not changed to the ON-state again within the set time after the acceleration button 232 is changed to the OFF-state, that is, when a state where only the deceleration button 233 is pressed continues for a predetermined time, the operation control unit 21 stops the forward travel of the rice transplanter 10.

As another example, for example, as illustrated in FIG. 7B, when the operator releases the deceleration button 233 at the time t3, that is, when the deceleration button 233 is changed to the OFF-state from the ON-state, the operation control unit 21 starts to measure the time. Then, when the deceleration button 233 is changed to the ON-state again within the set time after the deceleration button 233 is changed to the OFF-state (the time t4), the operation control unit 21 decelerates the vehicle speed of the rice transplanter 10 traveling forward.

When the deceleration button 233 is not changed to the ON-state again within the set time after the deceleration button 233 is changed to the OFF-state, that is, when a state where only the acceleration button 232 is pressed continues for a predetermined time, the operation control unit 21 stops the forward travel of the rice transplanter 10.

As described above, the operation control unit 21 outputs a forward travel instruction to the rice transplanter 10 when the acceleration button 232 and the deceleration button 233 are simultaneously pressed, and outputs a vehicle speed adjustment instruction (an acceleration instruction or a deceleration instruction) to the rice transplanter 10 when the OFF operation or the ON operation is performed on either the acceleration button 232 or the deceleration button 233. Thus, the operator can adjust the vehicle speed while making the rice transplanter 10 travel forward by the two operation portions 23.

According to another embodiment, the operation control unit 21 may continue the forward travel when the operator turns off either the acceleration button 232 or the deceleration button 233 after the acceleration button 232 and the deceleration button 233 are simultaneously pressed and the forward travel of the rice transplanter 10 is started. For example, when the operator simultaneously presses the acceleration button 232 and the deceleration button 233 to start the forward travel of the rice transplanter 10 and then turns off the acceleration button 232, the operation control unit 21 continuously outputs the forward travel instruction to the rice transplanter 10. As a result, after the forward travel is started by the simultaneous pressing operation, the operator can continue the forward travel even when the operator releases one of the operation portions 23 (performs the OFF operation). When the operator further turns off the deceleration button 233 so that both the acceleration button 232 and the deceleration button 233 enter the OFF-state, the operation control unit 21 outputs a stop instruction to the rice transplanter 10.

The operation control unit 21 may be capable of switching whether to continue the forward travel when one of the operation portions 23 is released. Specifically, the operation control unit 21 may be capable of switching the output method of the action instruction between a first output mode and a second output mode. In the first output mode, when an operation to change one of the operation portions 23 from the ON-state to the OFF-state is received after the simultaneous pressing operation is received, the forward travel instruction is continuously output to the rice transplanter 10. In the second output mode, when an operation to change one of the operation portions 23 from the ON-state to the OFF-state is received after the simultaneous pressing operation is received, the output of the forward travel instruction to the rice transplanter 10 is stopped. Thus, when the first output mode is set, the forward travel can be continued by the operator continuously pressing one of the operation portions 23, so that the operability can be improved. Conversely, when the second output mode is set, safety can be improved because forward travel is stopped by the operator releasing one of the operation portions 23.

Here, a specific example of a method for adjusting the action of the rice transplanter 10 will be described. The adjustment method includes a method of adjusting the action of the rice transplanter 10 by a short pressing operation (adjustment method 1) and a method of adjusting the action of the rice transplanter 10 by a long pressing operation (adjustment method 2).

### [Adjustment Method 1]

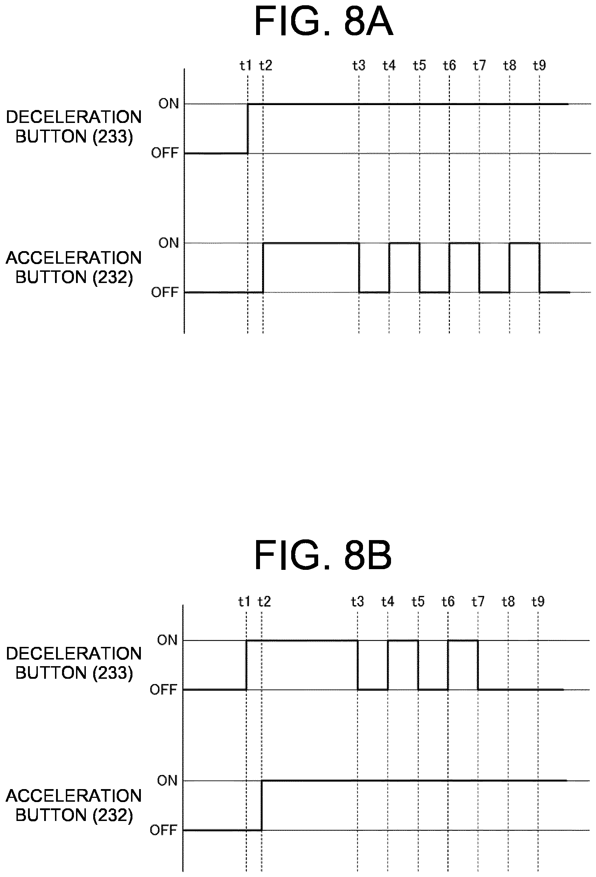

FIGS. 8A and 8B illustrate specific examples of the adjustment method 1 of the vehicle speed. As illustrated in FIG. 8A, the operation control unit 21 accelerates the vehicle speed for each short pressing operation. The acceleration amount (acceleration range) is set in advance, and the operation control unit 21 outputs, to the rice transplanter 10, an acceleration instruction to accelerate the vehicle speed by the acceleration amount set in advance for each short pressing operation received from the operator after the simultaneous pressing operation. **In** the example illustrated in FIG. 8A, the operator performs the simultaneous pressing operation (the times t2 to t3) and then performs the short pressing operation three times (the operation at times t4 to t5, the operation at times t6 to t7, and the operation at times t8 to t9). The operation control unit 21 outputs an acceleration instruction to the rice transplanter 10 for each short pressing operation, and the rice transplanter 10 accelerates the vehicle speed by the acceleration amount each time. After the time t9, the rice transplanter 10 continues to travel forward while maintaining the vehicle speed after three times of acceleration.

Further, as illustrated in FIG. 8B, the operation control unit 21 decelerates the vehicle speed for each short pressing operation. The deceleration amount (deceleration range) is set in advance, and the operation control unit 21 outputs, to the rice transplanter 10, a deceleration instruction to decelerate the vehicle speed by the deceleration amount set in advance for each short pressing operation received from the operator after the simultaneous pressing operation. **In** the example illustrated in FIG. 8B, the operator performs the simultaneous pressing operation (the times t2 to t3), and then performs the short pressing operation twice (the operation at the times t4 to t5 and the operation at the times t6 to t7). The operation control unit 21 outputs a deceleration instruction to the rice transplanter 10 for each short pressing operation, and the rice transplanter 10 decelerates the vehicle speed by the deceleration amount each time. After the time t7, the rice transplanter 10 continues to travel forward while maintaining the vehicle speed after two times of deceleration.

**In** the example illustrated in FIG. 8B, for example, when the operator performs a short pressing operation on the acceleration button 232 at the times t8 to t9, the operation control unit 21 outputs an acceleration instruction to the rice transplanter 10. **In** this case, the rice transplanter 10 decelerates twice and then accelerates once, and continues to travel forward while maintaining the vehicle speed after the acceleration.

As described above, in the adjustment method 1, the operation control unit 21 outputs the vehicle speed change instruction to the rice transplanter 10 in response to the short pressing operation. The rice transplanter 10 gradually changes the vehicle speed during forward travel in accordance with the number of times of the short pressing operation.

### [Adjustment Method 2]

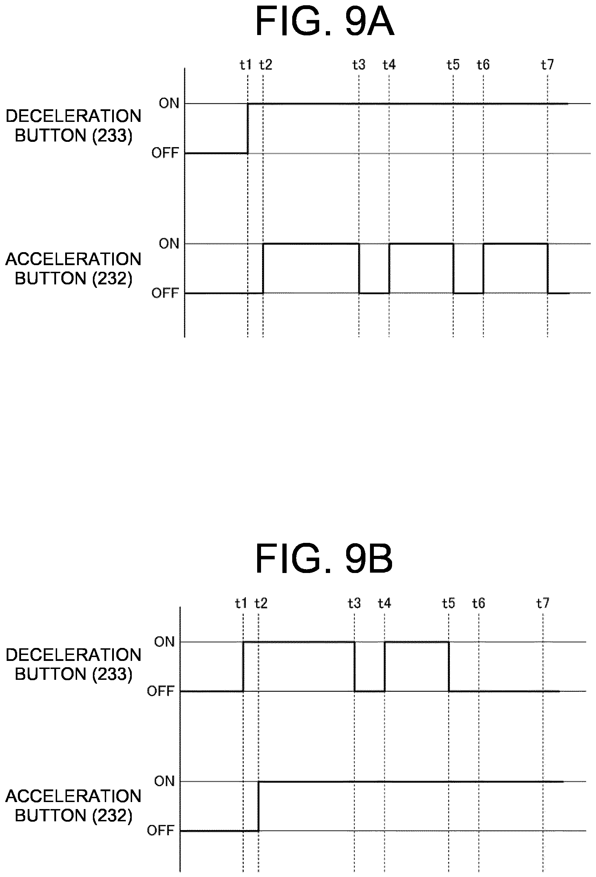

FIGS. 9A and 9B illustrate a specific example of an adjustment method 2 of the vehicle speed. As illustrated in FIG. 9A, the operation control unit 21 accelerates the vehicle speed in response to the long pressing operation. When receiving the long pressing operation from the operator after the simultaneous pressing operation, the operation control unit 21 outputs, to the rice transplanter 10, an acceleration instruction to accelerate the vehicle speed by the acceleration amount corresponding to the operation time (long-pressing period) of the long pressing operation.

In the example illustrated in FIG. 9A, the operator performs the simultaneous pressing operation (the times t2 to t3) and then performs the long pressing operation (the operation at the times t4 to t5) of the acceleration button 232. Therefore, the operation control unit 21 starts to output an acceleration instruction to the rice transplanter 10, for example, at the time when it is determined that the long pressing operation has been performed (after a predetermined time has elapsed from the time t4), and continues to output an acceleration instruction until the time t5. The rice transplanter 10 continuously (proportionally) accelerates the vehicle speed while acquiring the acceleration instruction. When the operator releases the acceleration button 232 at the time t5, the operation control unit 21 stops outputting the acceleration instruction. Thus, the rice transplanter 10 continues to travel forward at the vehicle speed obtained at the time t5.

Thereafter, when the operator performs the long pressing operation (the operation at the times t6 to t7) of the acceleration button 232 again at the time t6, the operation control unit 21 outputs the acceleration instruction to the rice transplanter 10. The rice transplanter 10 continuously accelerates the vehicle speed while acquiring the acceleration instruction. When the operator releases the acceleration button 232 at the time t7, the operation control unit 21 stops outputting the acceleration instruction. Thus, the rice transplanter 10 continues to travel forward at the vehicle speed obtained at the time t7.

**In** the example illustrated in FIG. 9B, the operator performs the simultaneous pressing operation (the times t2 to t3) and then performs the long pressing operation (the operation at the times t4 to t5) of the deceleration button 233. Therefore, the operation control unit 21 starts to output a deceleration instruction to the rice transplanter 10, for example, at the time when it is determined that the long pressing operation has been performed (after a predetermined time has elapsed from the time t4), and continues to output a deceleration instruction until the time t5. The rice transplanter 10 continuously (proportionally) decelerates the vehicle speed while acquiring the deceleration instruction. When the operator releases the deceleration button 233 at the time t5, the operation control unit 21 stops outputting the deceleration instruction. Thus, the rice transplanter 10 continues to travel forward at the vehicle speed obtained at the time t5.

In the example illustrated in FIG. 9B, for example, when the operator long-presses the acceleration button 232 at the times t6 to t7, the operation control unit 21 outputs an acceleration instruction to the rice transplanter 10. In this case, the rice transplanter 10 decelerates the vehicle speed corresponding to the long-pressing time of the deceleration button 233, then accelerates the vehicle speed corresponding to the long-pressing time of the acceleration button 232, and maintains the vehicle speed after the acceleration to continue the forward travel.

As described above, in the adjustment method 2, the operation control unit 21 outputs a vehicle speed change instruction to the rice transplanter 10 in response to the long pressing operation. The rice transplanter 10 continuously changes the vehicle speed during forward travel in accordance with the time (long-pressing time) of the long pressing operation.

The adjustment methods 1 and 2 can be combined, and the operation control unit 21 outputs an instruction to change the vehicle speed to the rice transplanter 10 based on each of the short pressing operation and the long pressing operation by the operator after the simultaneous pressing operation. As a result, the operator can adjust (finely adjust) the vehicle speed with a small action amount or a large action amount while causing the rice transplanter 10 to travel forward.

In the above example, the process of changing the vehicle speed at the time of forward travel has been described, but the process of changing the vehicle speed at the time of backward travel can be performed in the same manner. For example, when the operator simultaneously presses the PTO off button 234 and the temporary stop button 235 (see FIG. 4), the operation control unit 21 outputs a backward travel instruction to the rice transplanter 10 and then, when the operator performs a short pressing operation (the adjustment method 1) or a long pressing operation (the adjustment method 2) on the PTO off button 234, the operation control unit 21 outputs an acceleration instruction to the rice transplanter 10, and when the operator performs a short pressing operation (the adjustment method 1) or a long pressing operation (the adjustment method 2) on the temporary stop button 235, the operation control unit 21 outputs a deceleration instruction to the rice transplanter 10.

According to another embodiment, the operation control unit 21 may execute a process of changing the vehicle speed at the time of turning. For example, when the operator simultaneously presses the acceleration button 232 and the PTO off button 234, the operation control unit 21 outputs a right turn instruction to the rice transplanter 10 and then, when the operator performs a short pressing operation (the adjustment method 1) or a long pressing operation (the adjustment method 2) on the acceleration button 232, the operation control unit 21 outputs an acceleration instruction to the rice transplanter 10, and when the operator performs a short pressing operation (the adjustment method 1) or a long pressing operation (the adjustment method 2) on the PTO off button 234, the operation control unit 21 outputs a deceleration instruction to the rice transplanter 10.

Further, for example, when the operator simultaneously presses the deceleration button 233 and the temporary stop button 235, the operation control unit 21 outputs a left turn instruction to the rice transplanter 10 and then, when the operator performs a short pressing operation (the adjustment method 1) or a long pressing operation (the adjustment method 2) on the deceleration button 233, the operation control unit 21 outputs an acceleration instruction to the rice transplanter 10, and when the operator performs a short pressing operation (the adjustment method 1) or a long pressing operation (the adjustment method 2) on the temporary stop button 235, the operation control unit 21 outputs a deceleration instruction to the rice transplanter 10.

According to another embodiment, the operation control unit 21 may execute a process of changing the steering amount at the time of turning. For example, when the operator simultaneously presses the acceleration button 232 and the PTO off button 234, the operation control unit 21 outputs a right turn instruction to the rice transplanter 10 and then, when the operator performs a short pressing operation (the adjustment method 1) or a long pressing operation (the adjustment method 2) on the acceleration button 232, the operation control unit 21 outputs a steering amount increase instruction to the rice transplanter 10, and when the operator performs a short pressing operation (the adjustment method 1) or a long pressing operation (the adjustment method 2) on the PTO off button 234, the operation control unit 21 outputs a steering amount decrease instruction to the rice transplanter 10.

Further, for example, when the operator simultaneously presses the deceleration button 233 and the temporary stop button 235, the operation control unit 21 outputs a left turn instruction to the rice transplanter 10 and then, when the operator performs a short pressing operation (the adjustment method 1) or a long pressing operation (the adjustment method 2) on the deceleration button 233, the operation control unit 21 outputs a steering amount increase instruction to the rice transplanter 10, and when the operator performs a short pressing operation (the adjustment method 1) or a long pressing operation (the adjustment method 2) on the temporary stop button 235, the operation control unit 21 outputs a steering amount decrease instruction to the rice transplanter 10.

### [Operation Control Process]

An example of an operation control process executed by the operation device 20 will be described below with reference to FIG. 10.

The present invention can be regarded as an invention of an operation control method (an example of an operation method according to the present invention) for executing one or more steps included in the operation control process. In addition, one or more steps included in the operation control process described herein may be omitted as appropriate. The steps in the operation control process may be executed in a different order as long as the same effects are achieved. In addition, here, a case where the operation control unit 21 executes each step in the operation control process will be described as an example, but an operation control method in which one or more processors execute each step in the operation control process in a distributed manner is also considered as another embodiment.

In step S1, the operation control unit 21 determines whether a simultaneous pressing operation of the plurality of operation portions 23 has been received from the operator. When the simultaneous pressing operation has been received (S1: Yes), the operation control unit 21 proceeds to step S2. The operation control unit 21 waits until the simultaneous pressing operation is received (S1: No). For example, when the operator simultaneously presses two of the four operation portions 23 (see FIG. 4), that is, when both of the two operation portions 23 are changed to the ON-state within a predetermined time, the operation control unit 21 determines that the simultaneous pressing operation has been received.

Further, when the operation control unit 21 has not received the simultaneous pressing operation but has received a pressing operation of the one operation portion 23, the operation control unit 21 outputs, to the rice transplanter 10, the operation information (action instruction) corresponding to the function assigned to the operation portion 23. For example, when the operator presses the acceleration button 232 while the rice transplanter 10 is autonomously traveling, the operation control unit 21 outputs an acceleration instruction to the rice transplanter 10, and when the operator presses the deceleration button 233 while the rice transplanter 10 is autonomously traveling, the operation control unit 21 outputs a deceleration instruction to the rice transplanter 10.

Hereinafter, as an example, a case where the operator performs the simultaneous pressing operation of the acceleration button 232 and the deceleration button 233 while the rice transplanter 10 is stopped will be described.

In step S2, the operation control unit 21 outputs a forward travel instruction to the rice transplanter 10. As a result, the rice transplanter 10 starts forward travel. While the operator continuously presses the acceleration button 232 and the deceleration button 233, the operation control unit 21 continues to output the forward travel instruction to the rice transplanter 10, and the rice transplanter 10 continues to travel forward in accordance with the forward travel instruction.

Next, in step S3, the operation control unit 21 determines whether the acceleration button 232 has been changed to the OFF-state. For example, when the operator releases his/her hand from the acceleration button 232 out of the acceleration button 232 and the deceleration button 233 in the ON-state, the operation control unit 21 determines that the acceleration button 232 has been changed to the OFF-state. When it is determined that the acceleration button 232 has been changed to the OFF-state (S3: Yes), the operation control unit 21 proceeds to step S4. Conversely, when it is determined that the acceleration button 232 has not been changed to the OFF-state (S3: No), the operation control unit 21 proceeds to step S31.

In step S31, the operation control unit 21 determines whether the deceleration button 233 has been changed to the OFF-state. For example, when the operator releases his/her hand from the deceleration button 233 out of the acceleration button 232 and the deceleration button 233 in the ON-state, the operation control unit 21 determines that the deceleration button 233 has been changed to the OFF-state. When it is determined that the deceleration button 233 has been changed to the OFF-state (S31: Yes), the operation control unit 21 proceeds to step S32. Conversely, when it is determined that the deceleration button 233 has not been changed to the OFF-state (S31: No), the operation control unit 21 proceeds to step S3.

As described above, after receiving the simultaneous pressing operation, the operation control unit 21 determines which of the acceleration button 232 and the deceleration button 233 has been changed to the OFF-state (S3 and S31). When it is determined that the acceleration button 232 has been changed to the OFF-state (S3: Yes) after receiving the simultaneous pressing operation, the operation control unit 21 executes the processing from the following steps S4 to S6, and when it is determined that the deceleration button 233 has been changed to the OFF-state (S31: Yes) after receiving the simultaneous pressing operation, the operation control unit 21 executes the processing of the following steps S32 to S34.

In step S4, the operation control unit 21 determines whether the acceleration button 232 has been changed to the ON-state. For example, as illustrated in FIG. 7A, when the operator turns off the acceleration button 232 at the time t3 and then turns on the acceleration button 232 again at the time t4, the operation control unit 21 determines that the acceleration button 232 has been changed to the ON-state (S4: Yes) and proceeds to step S5.

Conversely, when it is determined that the acceleration button 232 has not been changed to the ON-state (S4: No), the operation control unit 21 proceeds to step S6.

In step S5, the operation control unit 21 outputs an acceleration instruction to the rice transplanter 10. The rice transplanter 10 accelerates the vehicle speed when acquiring the acceleration instruction. Here, the operation control unit 21 outputs, to the rice transplanter 10, the acceleration instruction corresponding to the operation method by the operator. For example, when the operator short-presses the acceleration button 232 (see FIG. 8A), the operation control unit 21 outputs, to the rice transplanter 10, an acceleration instruction to accelerate the vehicle speed by a predetermined acceleration amount (acceleration range) (see [Adjustment Method 1]). As a result, the rice transplanter 10 slightly increases the vehicle speed for forward travel.

For example, when the operator long-presses the acceleration button 232 (see FIG. 9A), the operation control unit 21 outputs, to the rice transplanter 10, an acceleration instruction to accelerate the vehicle speed by an acceleration amount (acceleration range) corresponding to the time of the long pressing operation (long-pressing period) (see [Adjustment Method 2]). As a result, the rice transplanter 10 continuously accelerates the vehicle speed for forward travel during the long pressing operation.

After step S5, the operation control unit 21 proceeds to step S3. The operation control unit 21 accelerates the vehicle speed for forward travel each time a short pressing operation or a long pressing operation of the acceleration button 232 is received (S3 to S5).

In step S6, the operation control unit 21 determines whether the deceleration button 233 has been changed to the OFF-state. For example, when the operator releases his/her hand from the acceleration button 232 and then releases his/her hand from the deceleration button 233, the operation control unit 21 determines that both the acceleration button 232 and the deceleration button 233 have been changed to the OFF-state. When it is determined that the deceleration button 233 has been changed to the OFF-state (S6: Yes), the operation control unit 21 proceeds to step S7.

Conversely, when it is determined that the deceleration button 233 has not been changed to the OFF-state (S6: No), the operation control unit 21 proceeds to step S4. In this case, since the deceleration button 233 is continuously in the ON-state, the operation control unit 21 continuously outputs the forward travel instruction to the rice transplanter 10, and the rice transplanter 10 continues to travel forward.

In step S7, the operation control unit 21 outputs a stop instruction to the rice transplanter 10. That is, when the operator releases both the acceleration button 232 and the deceleration button 233, the operation control unit 21 determines that both the acceleration button 232 and the deceleration button 233 have been changed to the OFF-state, and outputs a stop instruction to the rice transplanter 10. When outputting the stop instruction, the rice transplanter 10 stops the forward travel.

Conversely, when the deceleration button 233 has been changed to the OFF-state after the reception of the simultaneous pressing operation (S31: Yes), the operation control unit 21 determines whether the deceleration button 233 has been changed to the ON-state in step S32. For example, as illustrated in FIG. 7B, when the operator turns off the deceleration button 233 at the time t3 and then turns on the deceleration button 233 again at the time t4, the operation control unit 21 determines that the deceleration button 233 has been changed to the ON-state (S32: Yes) and proceeds to step S33.

Conversely, when it is determined that the deceleration button 233 has not been changed to the ON-state (S32: No), the operation control unit 21 proceeds to step S34.

In step S33, the operation control unit 21 outputs a deceleration instruction to the rice transplanter 10. When acquiring the deceleration instruction, the rice transplanter 10 decelerates the vehicle speed. Here, the operation control unit 21 outputs, to the rice transplanter 10, the deceleration instruction corresponding to the operation method by the operator. For example, when the operator short-presses the deceleration button 233 (see FIG. 8B), the operation control unit 21 outputs, to the rice transplanter 10, a deceleration instruction to decelerate the vehicle speed by a predetermined deceleration amount (deceleration range) (see [Adjustment Method 1]). As a result, the rice transplanter 10 slightly reduces the vehicle speed for forward travel.

For example, when the operator long-presses the deceleration button 233 (see FIG. 9B), the operation control unit 21 outputs, to the rice transplanter 10, a deceleration instruction to decelerate the vehicle speed by a deceleration amount (deceleration range) corresponding to the time of the long pressing operation (long-pressing period) (see [Adjustment Method 2]). As a result, the rice transplanter 10 continuously reduces the vehicle speed for forward travel during the long pressing operation.

After step S33, the operation control unit 21 proceeds to step S3. The operation control unit 21 decelerates the vehicle speed for forward travel each time a short pressing operation or a long pressing operation of the deceleration button 233 is received (S31 to S33).

In step S34, the operation control unit 21 determines whether the acceleration button 232 has been changed to the OFF-state. For example, when the operator releases his/her hand from the deceleration button 233 and then releases his/her hand from the acceleration button 232, the operation control unit 21 determines that both the acceleration button 232 and the deceleration button 233 have been changed to the OFF-state. When the operation control unit 21 determines that the acceleration button 232 has been changed to the OFF-state (S34: Yes), the operation control unit 21 proceeds to step S7 described above.

Conversely, when it is determined that the acceleration button 232 has not been changed to the OFF-state (S34: No), the operation control unit 21 proceeds to step S32. In this case, since the acceleration button 232 is continuously in the ON-state, the operation control unit 21 continuously outputs the forward travel instruction to the rice transplanter 10, and the rice transplanter 10 continues to travel forward.

As described above, the operation control unit 21 changes the acceleration button 232 from the ON-state to the OFF-state while maintaining the deceleration button 233 in the ON-state after the simultaneous pressing operation and then, when receiving the operation to change the acceleration button 232 from the OFF-state to the ON-state, outputs the acceleration instruction to accelerate the vehicle speed to the rice transplanter 10, and changes the deceleration button 233 from the ON-state to the OFF-state while maintaining the acceleration button 232 in the ON-state after the simultaneous pressing operation and then, when receiving the operation to change the deceleration button 233 from the OFF-state to the ON-state, outputs the deceleration instruction to decelerate the vehicle speed to the rice transplanter 10.

The operation control unit 21 executes a process (operation control process) of outputting, to the rice transplanter 10, an action instruction corresponding to the simultaneous pressing operation and an action instruction corresponding to an operation (short pressing operation or long pressing operation) after the above action instruction.

As described above, the operation device 20 according to the present embodiment is a device (for example, a remote controller) including the plurality of operation portions 23 that receives an instruction from a user (operator) to cause a work machine (for example, the rice transplanter 10) to perform a predetermined action. Further, the operation device 20 outputs a first action instruction to the work machine when receiving a simultaneous pressing operation (an example of a first operation according to the present invention) to change both the first operation portion 23 and the second operation portion 23 among the plurality of operation portions 23 to the ON-state. While maintaining the one operation portion 23 out of the first operation portion 23 and the second operation portion 23 in the ON-state after the first operation, the operation device 20 changes the other operation portion 23 from the ON-state to the OFF-state and then, when receiving a second operation (short pressing operation or long pressing operation) to change the other operation portion 23 from the OFF-state to the ON-state, outputs a second action instruction different from the first action instruction to the work machine.

With the above-described configuration, the operation device 20 can change (adjust) the traveling speed, for example, by performing a short pressing operation or a long pressing operation on one of the operation portions 23 after the work machine starts traveling by a simultaneous pressing operation on the two operation portions 23. As described above, the action instruction by the simultaneous pressing operation and the action instruction different from the above action instruction can be output to the work machine by using the same operation portion 23, and the action amount can be adjusted by a predetermined operation method for the operation portion 23, and therefore, it is possible to improve the operability of the operation device 20 that causes the work machine to perform an action.

### [Other Embodiments]

According to the above-described embodiment, the action instruction (the first action instruction) given to the rice transplanter 10 when the simultaneous pressing operation is received and the action instruction (the second action instruction) given to the rice transplanter 10 when the short pressing operation or the long pressing operation is received after the simultaneous pressing operation are instructions for different action targets. In the above example, when the first action instruction is a travel instruction for the travel (action target) of the rice transplanter 10, the second action instruction is a vehicle speed change instruction for the vehicle speed (action target). When the first action instruction is a turn instruction for a turn (action target), the second action instruction is a vehicle speed change instruction for the vehicle speed (action target) or an increase or decrease instruction for the steering amount (action target). As another example, when the first action instruction is a travel instruction, the second action instruction may be an instruction to lift or lower the work machine. For example, when the first action instruction is a travel instruction, the second action instruction may be a right or left offset instruction of the travel position. Further, for example, when the first action instruction is a travel instruction, the second action instruction may be an instruction to change an engine speed.

Conversely, according to another embodiment of the present invention, the first action instruction and the second action instruction may be instructions for the same action target. Further, the second action instruction may be an instruction to cause the action target to perform an action by an action amount smaller than the action amount corresponding to the first action instruction. For example, both the first action instruction and the second action instruction may be travel instructions for the travel (action target) of the rice transplanter 10. In this case, for example, the operation control unit 21 outputs a forward travel instruction to the rice transplanter 10 when the simultaneous pressing operation of the acceleration button 232 and the deceleration button 233 is received from the operator, then, when the acceleration button 232 is released from the hand and the OFF-state is set, outputs a stop instruction to the rice transplanter 10, and then, when the short pressing operation of the acceleration button 232 is received, outputs a forward travel instruction to the rice transplanter 10 to travel forward by a preset distance. As a result, for example, the operator can perform fine position adjustment, for example, cause the rice transplanter 10 to travel forward to the vicinity of a ridge by the simultaneous pressing operation and then, by repeating the short pressing operation, cause the rice transplanter 10 to move forward little by little to a predetermined position near the ridge.

As another example, both the first action instruction and the second action instruction may be lifting and lowering instructions for lifting and lowering (action target) of the work device 14. In this case, for example, the operation control unit 21 outputs a lowering instruction of the work device 14 to the rice transplanter 10 when receiving a simultaneous pressing operation of the acceleration button 232 and the deceleration button 233 from the operator, and then, when the acceleration button 232 is released from the hand and the OFF-state is set, outputs a lifting and lowering stop instruction of the work device 14 to the rice transplanter 10, and then, when receiving a short pressing operation of the acceleration button 232, outputs a lowering instruction to lower the work device 14 by a preset movement amount to the rice transplanter 10. As a result, for example, the operator can perform fine position adjustment, for example, lower the work device 14 to the vicinity of the paddy field by the simultaneous pressing operation and then, by repeating the short pressing operation, gradually lower the work device 14 and move the work device 14 to a predetermined position on the paddy field.

### [Other Functional Example of Operation Portion 23]

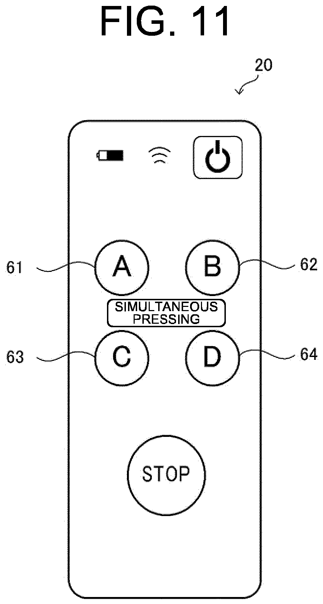

The function of each of the operation portions 23 is not limited to the above-described embodiment. As illustrated in FIG. 11, the operation device 20 according to the present invention can be represented as a device including operation portions 61 to 64 to which different functions A to D are assigned. The functions A to D may be the functions illustrated in FIG. 4 or may be other functions.

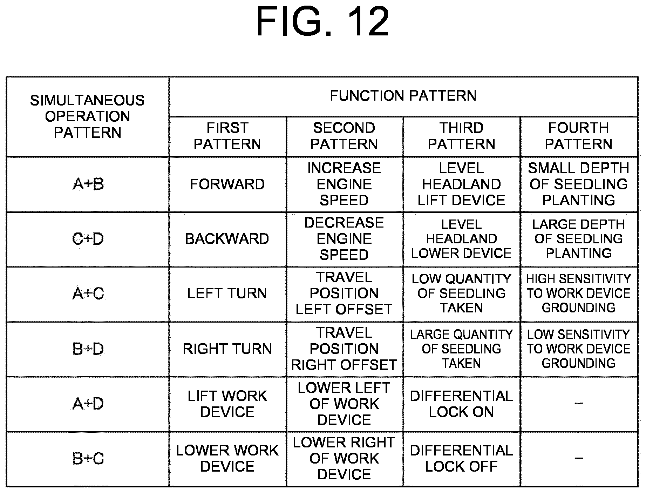

Further, the function that allows the work machine (the rice transplanter 10) to perform an action by the simultaneous pressing operation of two operation portions among the operation portions 61 to 64 may be any one of the plurality of patterns illustrated in FIG. 12.

For example, a first pattern illustrated in FIG. 12 corresponds to the embodiment described above (see FIG. 4). Specifically, when the operator simultaneously presses the operation portion 61 (A button) and the operation portion 62 (B button), the operation control unit 21 outputs a forward travel instruction to the rice transplanter 10, and when the operator simultaneously presses the operation portion 63 (C button) and the operation portion 64 (D button), the operation control unit 21 outputs a backward travel instruction to the rice transplanter 10. Further, when the operator simultaneously presses the operation portion 62 (B button) and the operation portion 64 (D button), the operation control unit 21 outputs a right turn instruction to the rice transplanter 10, and when the operator simultaneously presses the operation portion 61 (A button) and the operation portion 63 (C button), the operation control unit 21 outputs a left turn instruction to the rice transplanter 10. Further, when the operator simultaneously presses the operation portion 61 (A button) and the operation portion 64 (D button), the operation control unit 21 outputs an instruction to lift the work device 14 to the rice transplanter 10 and, when the operator simultaneously presses the operation portion 62 (B button) and the operation portion 63 (C button), the operation control unit 21 outputs an instruction to lower the work device 14 to the rice transplanter 10.

As another example, the functions described in a second pattern, a third pattern, and a fourth pattern may be assigned to the combinations of the simultaneous pressing operations of the operation portions. Further, in addition to the patterns illustrated in FIG. 12, a pattern of a function required in the transplanting work may be assigned to a combination of simultaneous pressing operations of the respective operation portions.

The operation control unit 21 may receive, from the operator, an operation to select any one of the first to fourth patterns as a function corresponding to a combination of simultaneous pressing operations, and may set the selected pattern. The operator may be able to appropriately switch the first pattern to the fourth pattern.

The autonomous traveling system 1 may include an operation terminal (for example, a tablet terminal) that performs various setting operations. The operation terminal performs, for example, a process of registering the field F, a process of registering the work vehicle, a process of registering the work device, a process of generating the target route, a process of setting travel information, and the like, in response to operations of the operator. The operation terminal can receive various operations that can be performed by the operation device 20, such as start and stop of the autonomous travel and can remotely control the action of the rice transplanter 10. The operation terminal can display a situation during the autonomous travel on the display unit.

### [Appendices of Invention]

An outline of the invention extracted from the embodiment will be added. The configurations and processing functions described in the following appendices can be selected and arbitrarily combined.

### <Appendix 1>

An operation device comprising a plurality of operation portions that receives, from a user, an instruction to cause a work machine to perform a predetermined action, wherein the operation device
outputs a first action instruction to the work machine when receiving a first operation to change both a first operation portion and a second operation portion among the plurality of operation portions to an ON-state, and
while maintaining one operation portion out of the first operation portion and the second operation portion in the ON-state after the first operation, changes the other operation portion from the ON-state to an OFF-state and then, when receiving a second operation to change the other operation portion from the OFF-state to the ON-state, outputs a second action instruction different from the first action instruction to the work machine.

### <Appendix 2>

The operation device according to appendix 1, wherein the second operation is an operation in which, after the first operation, the other operation portion is changed from the ON-state to the OFF-state while the one operation portion is maintained in the ON-state and then the other operation portion is changed from the OFF-state to the ON-state, and then within a predetermined time, the other operation portion is changed from the ON-state to the OFF-state.

### <Appendix 3>

The operation device according to appendix 2, wherein
the first action instruction and the second action instruction are instructions for the same action target, and
the second action instruction is an instruction to cause the action target to perform an action by an action amount smaller than an action amount corresponding to the first action instruction.

### <Appendix 4>

The operation device according to appendix 2, wherein
the first action instruction and the second action instruction are instructions for different action targets, and
the second action instruction is an instruction to cause the corresponding action target to perform an action by a preset action amount.

### <Appendix 5>

The operation device according to any one of appendices 1 to 4, wherein the second operation is an operation in which, after the first operation, the other operation portion is changed from the ON-state to the OFF-state while the one operation portion is maintained in the ON-state and then the other operation portion is changed from the OFF-state to the ON-state, and then for more than a predetermined time, the other operation portion is maintained in the ON-state.

### <Appendix 6>

The operation device according to appendix 5, wherein
the first action instruction and the second action instruction are instructions for different action targets, and
the second action instruction is an instruction to cause the corresponding action target to perform an action by an action amount corresponding to a period of the ON-state of the other operation portion for more than the predetermined time.

<Appendix 7>

The operation device according to appendix 6, wherein, in a case where an operation to change the other operation portion from the ON-state to the OFF-state is received after the action target is caused to perform an action by the action amount, the operation device maintains the action target after the action by the action amount.

### <Appendix 8>

The operation device according to any one of appendices 1 to 7, wherein the operation device outputs a travel instruction to the work machine when the first operation is received and outputs an instruction to change a vehicle speed to the work machine when the second operation is received.

### <Appendix 9>

The operation device according to appendix 8, wherein the operation device outputs, to the work machine, an instruction to change the vehicle speed corresponding to the period of the ON-state in the second operation.

### <Appendix 10>

The operation device according to appendix 8 or 9, wherein the operation device
changes the second operation portion from the ON-state to the OFF-state while maintaining the first operation portion in the ON-state after the first operation and then, when receiving the second operation to change the second operation portion from the OFF-state to the ON-state, outputs an acceleration instruction to accelerate the vehicle speed to the work machine, and
changes the first operation portion from the ON-state to the OFF-state while maintaining the second operation portion in the ON-state after the first operation and then, when receiving the second operation to change the first operation portion from the OFF-state to the ON-state, outputs a deceleration instruction to decelerate the vehicle speed to the work machine.

### <Appendix 11>

The operation device according to any one of appendices 1 to 10, wherein
a method of outputting the first action instruction is switchable between a first output mode and a second output mode,
in the first output mode, when an operation to change the other operation portion from the ON-state to the OFF-state is received after the second operation is received, the operation device continuously outputs the first action instruction to the work machine, and
in the second output mode, when an operation to change the other operation portion from the ON-state to the OFF-state is received after the second operation is received, the operation device stops outputting the first action instruction to the work machine.

### <Appendix 12>

A work machine that performs an action corresponding to an action instruction output from the operation device according to any one of appendices 1 to 11.

### REFERENCE SIGNS LIST

1 AUTONOMOUS TRAVELING SYSTEM
10 RICE TRANSPLANTER (WORK MACHINE)
11 VEHICLE CONTROL DEVICE
14 WORK DEVICE
111 TRAVELING PROCESSING UNIT
112 LIFTING AND LOWERING PROCESSING UNIT
113 VEHICLE SPEED CONTROL PROCESSING UNIT
114 DRIVE PROCESSING UNIT
20 OPERATION DEVICE
21 OPERATION CONTROL UNIT
22 STORAGE UNIT
23 OPERATION PORTION
211 RECEPTION PROCESSING UNIT
212 OUTPUT PROCESSING UNIT
213 NOTIFICATION PROCESSING UNIT
231 POWER BUTTON
232 ACCELERATION BUTTON (OPERATION PORTION)
233 DECELERATION BUTTON (OPERATION PORTION)
234 PTO OFF BUTTON (OPERATION PORTION)
235 TEMPORARY STOP BUTTON (OPERATION PORTION)
236 EMERGENCY STOP BUTTON

## Claims

1. An operation device comprising a plurality of operation portions that receives, from a user, an instruction to cause a work machine to perform a predetermined action, wherein the operation device
outputs a first action instruction to the work machine when receiving a first operation to change both a first operation portion and a second operation portion among the plurality of operation portions to an ON-state, and
while maintaining one operation portion out of the first operation portion and the second operation portion in the ON-state after the first operation, changes the other operation portion from the ON-state to an OFF-state and then, when receiving a second operation to change the other operation portion from the OFF-state to the ON-state, outputs a second action instruction different from the first action instruction to the work machine.

2. The operation device according to claim 1, wherein the second operation is an operation in which, after the first operation, the other operation portion is changed from the ON-state to the OFF-state while the one operation portion is maintained in the ON-state and then the other operation portion is changed from the OFF-state to the ON-state, and then within a predetermined time, the other operation portion is changed from the ON-state to the OFF-state.

3. The operation device according to claim 2, wherein
the first action instruction and the second action instruction are instructions for a same action target, and
the second action instruction is an instruction to cause the action target to perform an action by an action amount smaller than an action amount corresponding to the first action instruction.

4. The operation device according to claim 2, wherein
the first action instruction and the second action instruction are instructions for different action targets, and
the second action instruction is an instruction to cause the corresponding action target to perform an action by a preset action amount.

5. The operation device according to claim 1, wherein the second operation is an operation in which, after the first operation, the other operation portion is changed from the ON-state to the OFF-state while the one operation portion is maintained in the ON-state and then the other operation portion is changed from the OFF-state to the ON-state, and then for more than a predetermined time, the other operation portion is maintained in the ON-state.

6. The operation device according to claim 5, wherein
the first action instruction and the second action instruction are instructions for different action targets, and
the second action instruction is an instruction to cause the corresponding action target to perform an action by an action amount corresponding to a period of the ON-state of the other operation portion for more than the predetermined time.

7. The operation device according to claim 6, wherein, in a case where an operation to change the other operation portion from the ON-state to the OFF-state is received after the action target is caused to perform an action by the action amount, the operation device maintains the action target after the action by the action amount.

8. The operation device according to claim 1, wherein the operation device outputs a travel instruction to the work machine when the first operation is received and outputs an instruction to change a vehicle speed to the work machine when the second operation is received.

9. The operation device according to claim 8, wherein the operation device outputs, to the work machine, an instruction to change the vehicle speed corresponding to the period of the ON-state in the second operation.

10. The operation device according to claim 8 or 9, wherein the operation device
changes the second operation portion from the ON-state to the OFF-state while maintaining the first operation portion in the ON-state after the first operation and then, when receiving the second operation to change the second operation portion from the OFF-state to the ON-state, outputs an acceleration instruction to accelerate the vehicle speed to the work machine, and
changes the first operation portion from the ON-state to the OFF-state while maintaining the second operation portion in the ON-state after the first operation and then, when receiving the second operation to change the first operation portion from the OFF-state to the ON-state, outputs a deceleration instruction to decelerate the vehicle speed to the work machine.

11. The operation device according to claim 1, wherein
a method of outputting the first action instruction is switchable between a first output mode and a second output mode,
in the first output mode, when an operation to change the other operation portion from the ON-state to the OFF-state is received after the second operation is received, the operation device continuously outputs the first action instruction to the work machine, and
in the second output mode, when an operation to change the other operation portion from the ON-state to the OFF-state is received after the second operation is received, the operation device stops outputting the first action instruction to the work machine.

12. A work machine that performs an action corresponding to an action instruction output from the operation device according to any one of claims 1 to 11.

13. An operation method in an operation device including a plurality of operation portions that receives, from a user, an instruction to cause a work machine to perform a predetermined action, the operation method comprising:
receiving an operation for the plurality of operation portions from the user;
outputting a first action instruction to the work machine when receiving a first operation to change both a first operation portion and a second operation portion among the plurality of operation portions to an ON-state; and
while maintaining one operation portion out of the first operation portion and the second operation portion in the ON-state after the first operation, changing the other operation portion from the ON-state to an OFF-state and then, when receiving a second operation to change the other operation portion from the OFF-state to the ON-state, outputting a second action instruction different from the first action instruction to the work machine.

14. An operation program in an operation device including a plurality of operation portions that receives, from a user, an instruction to cause a work machine to perform a predetermined action, the operation program causing one or more processors to execute:
receiving an operation for the plurality of operation portions from the user;
outputting a first action instruction to the work machine when receiving a first operation to change both a first operation portion and a second operation portion among the plurality of operation portions to an ON-state; and
while maintaining one operation portion out of the first operation portion and the second operation portion in the ON-state after the first operation, changing the other operation portion from the ON-state to an OFF-state and then, when receiving a second operation to change the other operation portion from the OFF-state to the ON-state, outputting a second action instruction different from the first action instruction to the work machine.
